# EUROPEAN PATENT SPECIFICATION

(11) **EP 0 806 557 B1**
(45) Date of publication and mention of the grant of the patent: **02.04.2003**
(21) Application number: 97106745.9
(22) Date of filing: 23.04.1997
(51) Int. Cl.: F02B 33/26, F02B 33/04, F02B 61/02

(54) **Supercharged internal combustion engine**
Brennkraftmaschine mit Aufladung
Moteur à combustion interne suralimenté

(30) Priority: 23.04.1996 JP 10111796
(43) Date of publication of application: 12.11.1997
(73) Proprietor: YAMAHA HATSUDOKI KABUSHIKI KAISHA, Iwata-shi Shizuoka-ken, 438 (JP)
(72) Inventor: Taue, Jun, Iwata-Shi, Shizuoka-ken (JP); Kuranishi, Masahisa, Iwata-Shi, Shizuoka-ken (JP)
(74) Representative: Grünecker, Kinkeldey, Stockmair & Schwanhäusser Anwaltssozietät

(56) References cited:
- EP-A- 0 707 141
- DE-A- 4 226 925
- JP-A- 3 253 722
- US-A- 1 812 566
- US-A- 4 185 598
- US-A- 4 732 116

## Description

This invention relates to a supercharged internal combustion engine for a vehicle, comprising a cylinder block with a crank case, a cylinder head and a cylinder bore slidingly receiving a reciprocatable piston being connected to a crankshaft by means of a connecting rod, a supercharge system, a suction pipe for intake air, and a pressurized intake air pipe for providing a combustion chamber with pressurized air.

Recent years, a supercharge system has been proposed for the purpose of improving engine output in which air drawn into the crank chamber, for example, is compressed by the swinging movement of the connecting rod to be supplied to the combustion chamber (eg, see Japanese Unexamined Patent Publication Hei 6-93869). The supercharge system provided with this connecting rod type supercharging mechanism or a piston type supercharging mechanism adapted to compress air drawn into the crank chamber, through reciprocating movement of pistons, is called a crank chamber type supercharge system.

In mounting an engine with such a supercharge system on the transportation equipment, a large path length may be needed for the intake air passage from the throttle valve to the combustion chamber, depending especially on the arrangement of the suction pipe for drawing air into the crank chamber, the pressurized intake air pipe for compressing air drawn into the crank chamber to supply the compressed air to the combustion chamber, or the throttle valve. As a result, a problem might arise of slow response in charging fresh air into the combustion chamber because of the time lag during throttle valve operation, which prevents the transportation equipment from accelerating or decelerating smoothly.

Prior art document US 4,732,116 A discloses a supercharged internal combustion engine for a vehicle comprising a supercharge system and a suction pipe for intake air, a pressurized intake air pipe providing a combustion chamber with pressurized air and, furthermore, having a first throttle valve in the pressurized intake air. Within the suction pipe, there is provided a second throttle valve. Yet, another supercharged internal combustion engine is known from JP 3,253,722 A.

It is an object of the present invention to provide a supercharged internal combustion engine as indicated above which enhances the response to changes of the engine operating conditions especially for charging fresh air into the combustion chamber.

JP 3253722 A (abstract) discloses a supercharged and usual internal combustion engine for a vehicle, comprising
cylinder block with a crank case , a cylinder head and a cylinder bore slidingly receiving a reciprocatable piston being connected to a crankshaft by means of a connecting rod -
a supercharge system, a suction pipe for intake air, and a pressurized intake air pipe providing a combustion chamber with pressurized air, with a first throttle valve provided in the pressurized intake air pipe and
a bypass pipe including a valve connecting said pressurized intake air pipe with said suction pipe.

US4185598A (fig. 3,6) and / or DE4226925A (fig. 1 -8, cl. 3, claims) both disclose a supercharged internal combustion engine for a vehicle, comprising a cylinder block with a crank case , a cylinder head and a cylinder bore slidingly receiving a reciprocatable piston being connected to a crankshaft by means of a connecting rod, a supercharge system (in the crank case) , a suction pipe for intake air and a pressurized intake air pipe for providing a combustion chamber with pressurized air and a first and second throttle valve provided in the pressurized intake air or suction pipe respectively
wherein the first and second throttle valves are associated to each other such that both throttle valves are simultaneously openable and closable, respectively.

According to the present invention, this object is solved with an internal combustion engine as defined in claim 1.

preferred embodiments of the present invention are laid down in further dependent claims.

In the following, the present invention is explained in greater detail with respect to several embodiments thereof in conjunction with the accompanying drawings, wherein:
Fig. 1 is a schematic illustration of a scooter type autobicycle.
Fig. 2 is a sectional view of a rear wheel drive system with the rear wheel rotatable in the same direction as the engine.
Fig. 3 is a sectional view of another embodiment of a rear wheel drive system with the rear wheel rotatable in the same direction as the engine.
Fig. 4 is a general view of an engine being mounted on the scooter.
Fig. 5 is a side view of a first embodiment of an air-cooled four-stroke unit-swinging engine unit.
Fig. 6 is a plan view of a first embodiment of an air-cooled four-stroke unit-swinging engine unit.
Fig. 7 is a side view of a second embodiment of a water-cooled four-stroke unit-swinging engine unit.
Fig. 8 is a plan view of a second embodiment of a water-cooled four-stroke unit-swinging engine unit.
Fig. 9 is a side view of a third embodiment of an air-cooled four-stroke unit-swinging engine unit.
Fig.10 is a plan view of a third embodiment of an air-cooled four-stroke unit-swinging engine unit.
Fig.11 is a side view of a fourth embodiment of a water-cooled four-stroke unit-swinging engine unit.
Fig.12 is a plan view of a fourth embodiment of a water-cooled four-stroke unit-swinging engine unit.
Fig. 13 is a plan view of another example of a fifth embodiment of an air-cooled four-stroke unit-swinging engine unit.
Fig. 14 is a side view of another example of a fifth embodiment of an air-cooled four-stroke unit-swinging engine unit.
Fig. 15 is a sectional view of a supercharged engine.
Fig. 16 is a sectional view taken along line XVI-XVI of Fig. 15.
Fig. 17 is a sectional view taken along line XVII-XVII of Fig. 15.
Fig. 18 is a side view of a sixth embodiment of an air-cooled four-stroke unit-swinging engine unit.
Fig. 19 is a plan view of a sixth embodiment of an air-cooled four-stroke unit-swinging engine unit.
Fig. 20 is a side view of a seventh embodiment of a water-cooled four-stroke unit-swinging engine unit.
Fig. 21 is a plan view of a seventh embodiment of a water-cooled four-stroke unit-swinging engine unit.
Fig. 22 is a side view of a eighth embodiment of an air-cooled four-stroke unit-swinging engine unit.
Fig. 23 is a plan view of a eighth embodiment of an air-cooled four-stroke unit-swinging engine unit.
Fig. 24 is a side view of a ninth embodiment of a water-cooled four-stroke unit-swinging engine unit.
Fig. 25 is a plan view of a ninth embodiment of a water-cooled four-stroke unit-swinging engine unit.
Fig. 26 is a side view of a tenth embodiment of an air-cooled four-stroke unit-swinging engine unit.
Fig. 27 is a plan view of a tenth embodiment of an air-cooled four-stroke unit-swinging engine unit.
Fig. 28 is a side view of a eleventh embodiment of a water-cooled four-stroke unit-swinging engine unit.
Fig. 29 is a plan view of a eleventh embodiment of a water-cooled
Fig. 30 is a side view of a twelfth embodiment of an air-cooled four-stroke unit-swinging engine unit.
Fig.31 is a plan view of a twelfth embodiment of an air-cooled four-stroke unit-swinging engine unit.
Fig. 32 is a side view of a thirteenth embodiment of a water-cooled four-stroke unit-swinging engine unit.
Fig. 33 is a plan view of a thirteenth embodiment of a water-cooled four-stroke unit-swinging engine unit.
Fig. 34 is a side view of a fourteenth embodiment of an air-cooled four-stroke unit-swinging engine unit with a supercharge tank.
Fig. 35 is a plan view of a fourteenth embodiment of an air-cooled four-stroke unit-swinging engine unit with a supercharge tank.
Fig. 36 is a side view of a fifteenth embodiment of a water-cooled four-stroke unit-swinging engine unit with an intercooler.
Fig. 37. is a plan view of a fifteenth embodiment of a water-cooled four-stroke unit-swinging engine unit with an intercooler.
Fig. 38 is a sectional view of a rear wheel drive system with the rear wheel rotatable in the opposite direction to the engine.
Fig. 39 is a sectional view of another example of a rear wheel drive system with the rear wheel rotatable in the opposite direction to the engine.

A vehicle carrying a supercharged engine according to this invention will be described below with reference to the accompanying drawings.

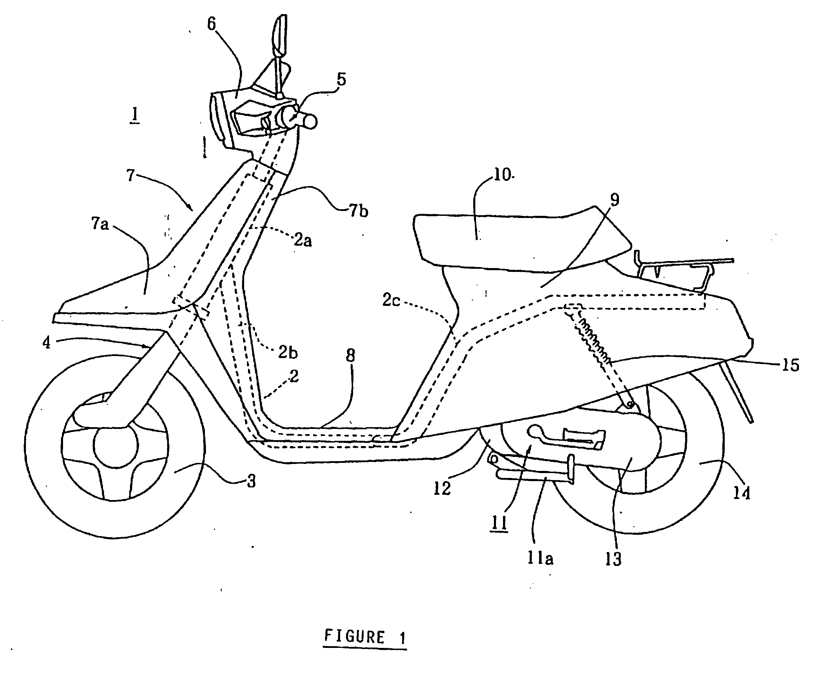

First, a scooter type autobicycle incorporating the supercharged engine is explained. Fig. 1 is a schematic illustration of a scooter type autobicycle. In the figure, numeral 1 designates a scooter type autobicycle embodying this invention. A body frame 2 of the autobicycle is of an under bone type, in which a head pipe 2a is connected to the upper end of a main frame 2b in the shape of a letter L in profile; the main frame 2b is connected at the lower end to the front end of a pair of right and left side frames 2c; and the side frames 2c rises upwardly and further extends rearwardly. To the head pipe 2a is fitted, for steering movement in the right and left directions, a front fork 4 supporting at the lower end a front wheel 3; and to the upper end of the front fork 4 is mounted fixedly a steering handle 5.

The regions around the steering handle 5 and the head pipe 2a are covered by a handle cover 6 and a separate type front cover 7 divided by a front cover 7a and rear cover 7b, respectively. At the connection of the main frame 2b and side frames 2c is disposed a foot board 8 constituting a foot rest portion, and at both right and left sides of the side frames 2c extends a side cover 9. Upwardly of the side cover 9 is located a seat 10.

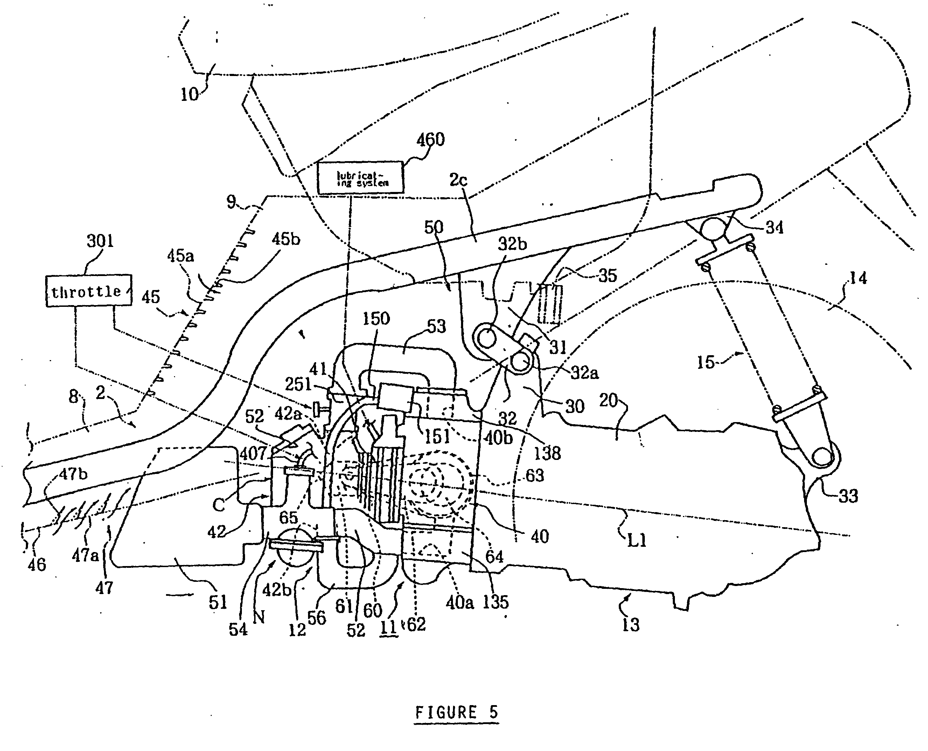

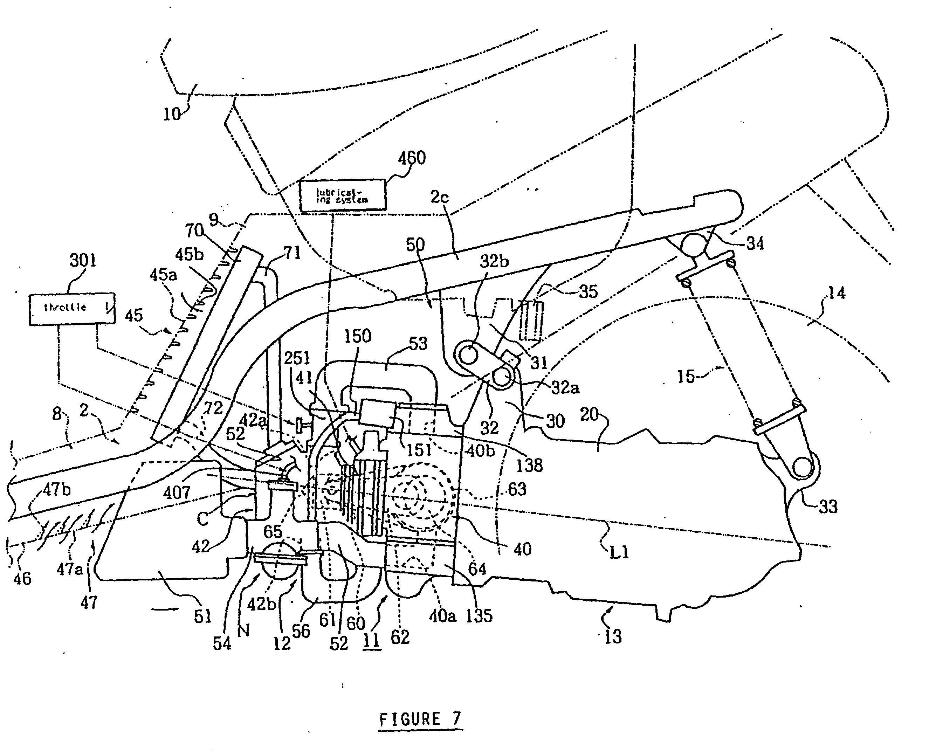

Downwardly of the upper bent portion of the right and left side frames 2c is mounted a unit-swinging engine unit 11. The engine unit 11 is comprised of an engine body 12 extending substantially horizontally and supported for swinging movement around a pivot shaft 32a (see Fig. 5, Fig. 7 etc) which is disposed crosswise and horizontally, and a rear wheel transmission 13 connected integrally with and extending rearwardly at the left side of the engine body 12; and on the rear end of the transmission 13 is supported a rear wheel. The rear wheel transmission 13 is supported, at the rear end, on the side frames 2c through a rear suspension 15.

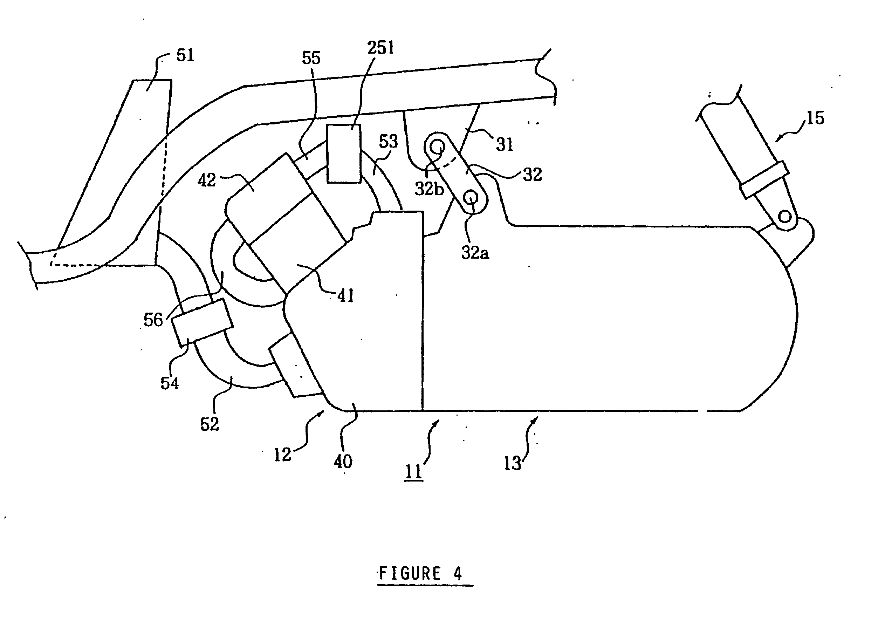

Forward engine inclination as referred to here means that the engine body 12 is disposed forwardly of the pivot shaft 32a and extends forwardly from the vertical plane passing the crank shaft 64. Fig. 4, a general view of an engine being mounted on the scooter, shows another example of the forwardly inclined engine. The cylinder shaft of the engine body 12 leans forwardly at an angle from the vertical plane. Parts shown by reference numerals will be explained below. The swinging engine unit 11 is adapted to be swingable about the pivot shaft 32a.

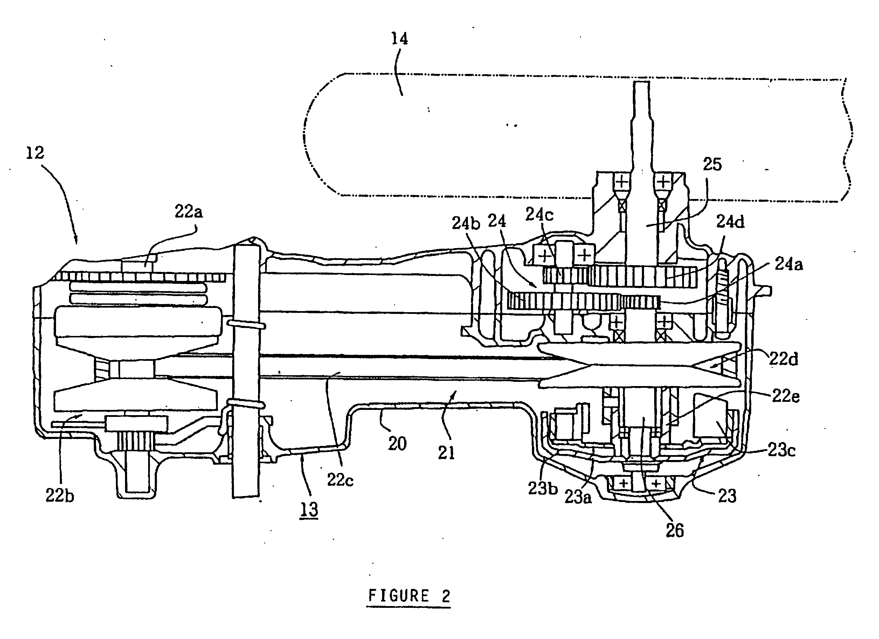

Now, the rear wheel drive system of the unit-swinging engine unit 11 is described. Fig. 2 is a sectional view of the rear wheel drive system with the rear wheel rotatable in the same direction as the engine. The rear wheel transmission 13 of the unit-swinging engine unit 11 extends rearwardly at one side of the engine body 12. A power transmission mechanism 21 enclosed in a transmission case 20 of the rear wheel transmission 13, is comprised of a V-belt auto-speed changer 22, a centrifugal clutch 23, an output shaft 26, and a gear train 24.

The V-belt auto-speed changer 22 is comprised of an input shaft 22a, a front sheave 22b, a V-belt 22c, a rear sheave 23d, an output shaft 22e etc. Power from the engine body 12 is transmitted to the input shaft 22a; further from the front sheave 22b to the rear sheaves 22d through the V-belt 22c while changing its speed automatically; and from the output shaft 22e to the centrifugal clutch 23.

The centrifugal clutch 23 is comprised of an inner housing 23a, an outer housing 23b, a centrifugal cam 23c etc. Power from the output shaft 22e of the V-belt auto-speed changer 22 is transmitted to the inner housing 23a; then to the outer housing 23b from the centrifugal cam 23c which is opened outwardly by centrifugal force; and further to an output shaft 26.

A gear train 24 is comprised of a first gear 24a, second gear 24b, third gear 24c, fourth gear 24d etc. The power is transmitted, while reducing its speed, from the first gear 24a mounted on the output shaft 26, through the second, third, and fourth gears 24b, 24c, 24d, to a rear wheel shaft 25. This gear train 24 allows the rear wheel 14 to rotate in the same direction as the engine, that is, the turning direction of the rear wheel 14 during the forward movement of the vehicle coincides with the engine revolution. The rear wheel shaft 25 is disposed coaxially with and separated from the output shaft 26.

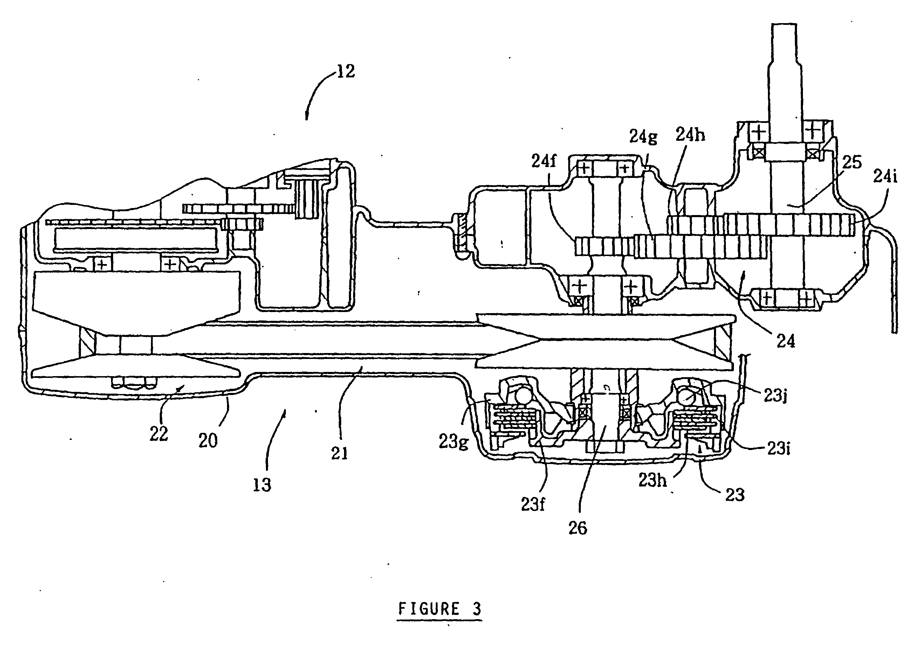

Fig. 3 is a sectional view of another example of the rear wheel drive system with the rear wheel rotatable in the same direction as the engine. In this rear wheel transmission 13 of the unit-swinging engine unit 11, like the preceding example, a power transmission mechanism 21 enclosed in a transmission case 20 of the rear wheel transmission 13, is comprised of a V-belt auto-speed changer 22, a centrifugal clutch 23, an output shaft 26, and a gear train 24, though the constructions are different for the centrifugal clutch 23 and the gear train 24.

The centrifugal clutch 23 is comprised of an inner housing 23f, an outer housing 23g, friction plates 23h, 23i, centrifugal balls 23j etc. Power from the V-belt auto-speed changer 22 is transmitted to the outer housing 23g of the centrifugal clutch 23; then to the inner housing 23f as a result of the centrifugal balls 23j being moved outwardly by the centrifugal force and the friction plates 23h, 23i thereby being engaged with each other while guided by the inner and outer housings 23f, 23g for exclusive axial movement; and further to the output shaft 26.

A gear train 24 is comprised of a first gear 24f, second gear 24g, third gear 24h, fourth gear 24i etc. The power is transmitted, while reducing its speed, from the first gear 24f mounted on the output shaft 26, through the second, third, and fourth gears 24g, 24h, 24i, to a rear wheel shaft 25. This gear train 24 allows the rear wheel 14 to rotate in the same direction as the engine. The rear wheel shaft 25 is located rearwardly of the output shaft 26.

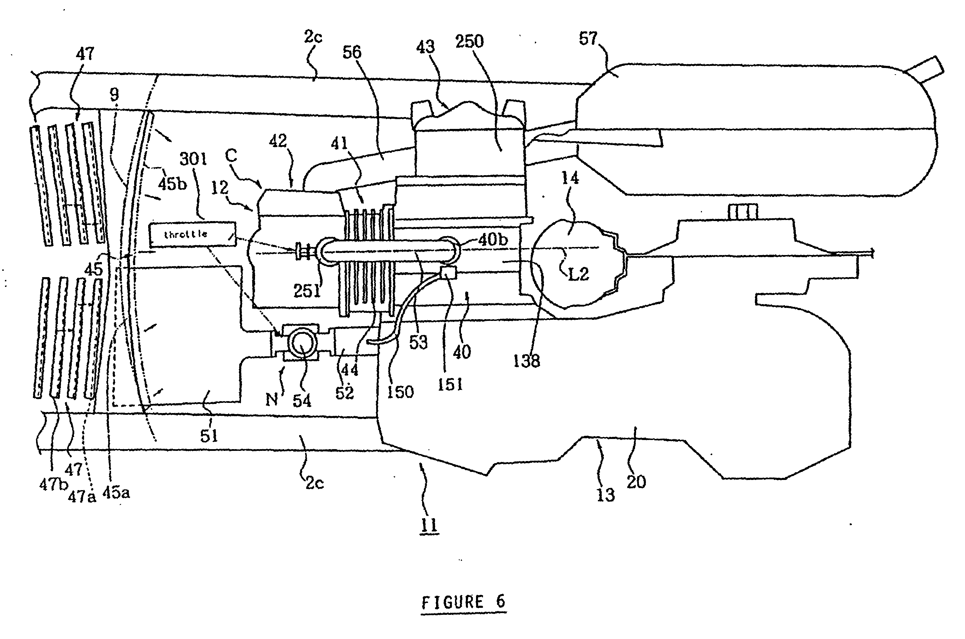

Now, the general construction of a first embodiment of the unit-swinging engine unit 11 is described. Fig. 5 and Fig. 6 show a first embodiment of the unit-swinging engine unit incorporating an air-cooled four-stroke supercharged engine, Fig. 5 is a side view of the unit-swinging engine unit, and Fig. 6 a plan view of the same.

The unit-swinging engine unit 11 is mounted downwardly of the upper bent portion of the right and left side frames 2c. This engine unit 11 is so arranged that a bracket 30 provided at the front of the transmission case 20 of the rear wheel transmission 13, and a bracket 31 of the side frames 2c, are connected by a link 32; a bracket 33 provided at the rear of the transmission case 20 and a bracket 34 of the side frames 2c, are connected by the rear suspension 15; and the engine unit 11 is adapted to be swingable about the pivot shaft 32a between the link 32 and the bracket 30. Between the bracket 31 and the link 32 is interposed a resilient bush (not shown), which prevents the excessive turning movement of the link 32 around the support shaft 32b.

Also, a stopper 35 is provided for restricting the upward swinging movement of the rear transmission 13. The stopper prevents the engine body 12 from interfering other components by engaging one side of the link 32 when a stand 11a mounted pivotally on the engine unit 11 is raised to support the vehicle body with the engine unit 11 being pushed up and the link 32 being turned upward.

The engine body 12 is of a forced air cooling four-stroke single cylinder type, which is so arranged that to a crank case 40 are connected a cylinder block 41 and a cylinder head 42. In a cylinder bore 60 of the cylinder block 41 is inserted for sliding movement a piston 24, which is connected through a connecting rod 62 to a crank shaft 64 disposed in a crank chamber 63.

The engine body 12 is fitted with a forced cooling fan 43 for supplying cooling air, and the cylinder block 41 is provided with cooling fins 44 for increasing radiating areas. The cylinder head 42 is also provided with cooling fins (not shown). The side cover 9 under the seat 10 is provided with a front air inlet 45, which is comprised of slits 45a and a louver 45b, and a running wind is induced from the front toward the engine body 12. In a bottom cover 46 under the foot board 8 is provided a bottom air inlet 47, which is comprised of slits 47a and a louver 47b, and a running wind is induced from the underside toward the engine body 12.

The engine body 12 is provided with a connecting rod type supercharge system 50. The air filtered by an air cleaner 51 is drawn from a crank chamber suction port 40a at the bottom of the crank case 40 into the crank chamber 63 through a carburetor 54 constituting a fuel supply system N and a suction pipe 52. The air cleaner 51 is disposed forwardly of the engine body 12 and rearwardly of the bottom air inlet 47, at a position where a cool running wind can be drawn easily.

Air pressurized by the connecting rod type supercharging mechanism in the engine body 12, is supplied from a crank chamber delivery port 40b at the top of the crank case 40 to a combustion chamber 65 through a pressurized intake air pipe 53 and an intake control valve 251, and the intake control valve 251 is adapted to be actuated in association with the carburetor 54 through operation of the throttle 301. Fuel is supplied from a suction port 42a on the top of the cylinder head 42 to the combustion chamber 65 through operation of the intake control valve 251.

Since the engine unit 11 changes its position during running, a flexible component is arranged for a part or the entire portion of the suction pipe 52 between the air cleaner 51 and the engine body 12. The carburetor 54 is connected directly to the air cleaner 51, and mounted fixedly to the vehicle body. The intake control valve 251 is fixed to the cylinder block 41 or the cylinder head 42. Associated with the displacement of the engine unit 11 during running, the carburetor 54, the pressurized intake air pipe 53, the intake control valve 251, and an exhaust pipe 56 described below, will change their position substantially integrally with the engine body 12.

To an exhaust outlet 42b on the bottom of the cylinder head 42 is connected the exhaust pipe 56, which extends rearwardly at the right side of the engine unit 11, and the rear end of which is connected a muffler 57.

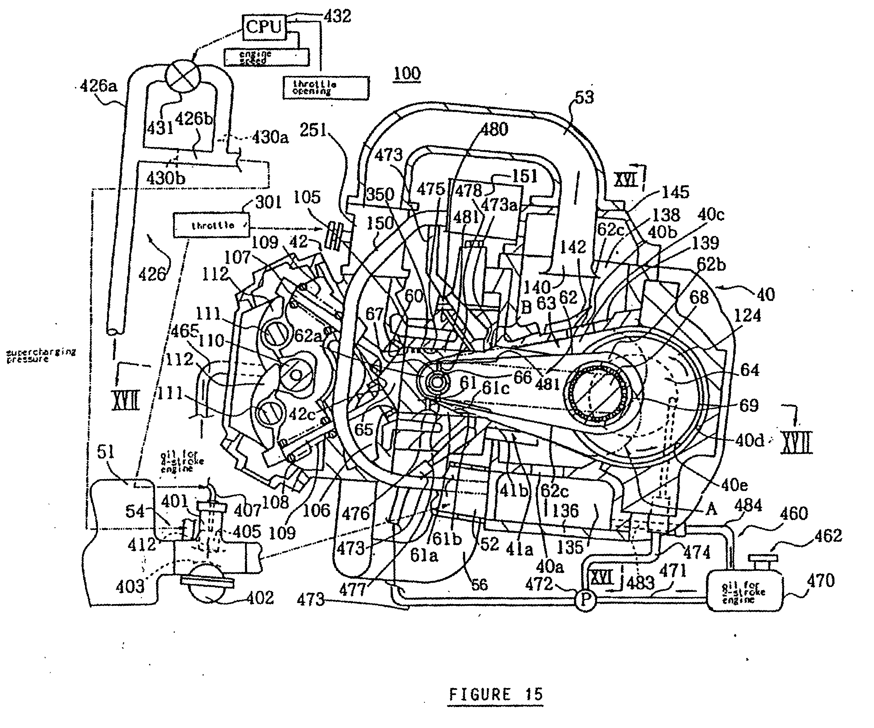

The engine body 12 is also provided with a lubricating system 460, which draws and pressurizes two-cycle lubricating oil, and the pressurized lubricating oil is supplied to the bearings around a crank shaft 64, piston sliding portions in the cylinder block 41 etc. To the valve drive system in the cylinder head 42 is supplied circulatively four-cycle lubricating oil by a lubricating system (not shown). Detailed description will be given with reference to Fig. 15.

In this embodiment, upstream of the pressurizing stage in the crank chamber 63 is disposed the carburetor 54 constituting the fuel supply system N for supplying fuel while the intake control valve 251 is disposed downstream of the pressurizing stage in the crank chamber 63, and the intake control valve 251 and the carburetor 54 are adapted to be actuated in association with operation of the throttle 301, so that when the fuel supply from the carburetor 54 is stopped, a higher intake air pressure is retained with the intake control valve 251 closed. As a result, when the intake control valve 251 is opened in association with the carburetor 54, fresh air can be charged into the combustion chamber without time lag, thereby effecting improved response of the pressurized fresh air supply as well as of the fuel supply. A pressurized intake air passage 138 and a suction passage 135, as described below, is in communication with each other through a bypass pipe 150 disposed outside the engine 100 and at one end of the bypass pipe 150 is disposed a bypass valve 151 operable against the throttle movement, so that the response of the pressurized fresh air supply is further improved. In addition, the opening of the bypass valve 151 is enlarged during low loading when the throttle opening is small, so that the amount of pressurized fresh air flowing from the pressurized intake air passage 138 back to the suction passage 135, is increased, which decreases the pressure in the pressurized intake air passage 138, thereby effecting a reduced amount of work in the supercharge system. This embodiment has a lot of favorable features due to the unique construction in addition to that defined in the appended claims, as described below.

First, the air cleaner 51 is disposed rearwardly of the bottom air inlet 47; the carburetor 54 and the suction pipe 52 connected to the air cleaner 51 extend along the left side of the cylinder head 42 and the cylinder block 41, to be connected to the bottom of the crank case 40; and fresh air is drawn from the bottom of the crank chamber 63. The air cleaner 51 is disposed forwardly of the crank chamber 63 as shown in Fig. 5 and on the rear wheel transmission side as shown in Fig. 6, so that cool fresh air can be drawn, thereby improving charging efficiency and thus engine performance. In addition, the air cleaner 51 does not obstruct the flow of a running wind, and the cool air of the running wind blows against the pressurized intake air pipe 53 which is the passage of the fresh air at a high temperature pressurized in the crank case 40, and the intake control valve 251, which provides higher cooling capacity, thereby effecting improved engine performance and durability due to higher charging efficiency. The cooling capacity of the exhaust pipe 56 and a generator 250 is also increased, thereby improving durability.

Secondly, the engine body 12 is located forwardly of the bracket 31, or the support section of the vehicle body, so that a cylinder C can be inclined forwardly. The crank shaft 64 is disposed horizontally, the crank chamber suction port 40a downwardly of the crank shaft 64, and the crank chamber delivery port 40b upwardly of the crank shaft 64. As a result, lubricating oil supplied to the sliding portions of the piston 61 or the bearings around the crank shaft 64, is prevented from entering into the combustion chamber 65 and collected in the crank case 40, contributing to the lubrication of the components to be lubricated such as piston sliding portions, large and small end bearings of the connecting rod 62, and bearings around the crank shaft 64, thereby-reducing the lubricating oil supply as well as the lubricating oil consumption.

Thirdly, as shown in Fig. 5, the crank chamber delivery port 40b and the intake port of the cylinder head 42 are located at the same height from the engine axial line L1, so that the length of the pressurized intake air pipe 53 can be reduced, thereby decreasing flow path resistance and thus improving charging efficiency as well as engine performance.

Fourthly, the engine body 12 is provided, at the bottom, with the exhaust outlet 42b, so that the exhaust pipe 56 is located at a position for easy exposure to the outside air such as a running wind, with higher cooling capacity, thereby reducing thermal influence, thus improving durability of the exhaust pipe 56, and further, decreasing the exhaust pressure, thus improving exhaust efficiency as well as engine performance. In addition, the running stability is improved because of the weighty exhaust pipe 56 being disposed at a lower position of the vehicle body. Further, the exhaust pipe 56 has a tendency of being corroded by moisture in fuel or that produced by combustion, but if necessary, replacement is easier because of its location on the outside of the vehicle body in this embodiment.

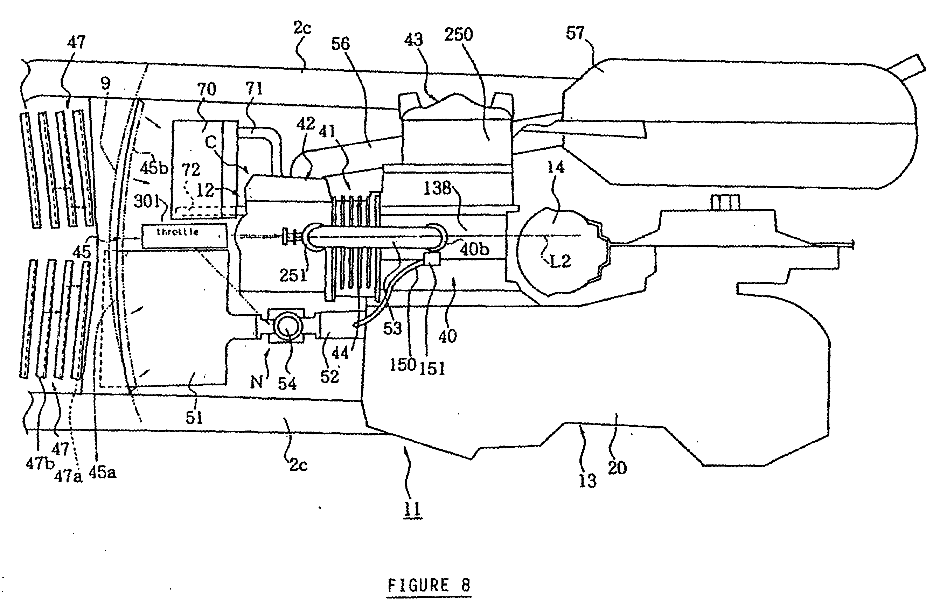

Fig. 7 and Fig. 8 show a second embodiment of the unit-swinging engine unit incorporating a water-cooled and partially air-cooled four-stroke supercharged engine, Fig. 7 is a side view of the unit-swinging engine unit, and Fig. 8 a plan view of the same. In the engine unit 11 of this embodiment, as with the previous embodiment except that the air-cooled engine in Fig. 5 and Fig. 6 is replaced by a water-cooled type, upstream of the pressurizing stage in the crank chamber 63 is disposed the carburetor 54 constituting the fuel supply system N for supplying fuel while the intake control valve 251 is disposed downstream of the pressurizing stage in the crank chamber 63, and the intake control valve 251 and the carburetor 54 are adapted to be actuated in association with operation of the throttle 301, so that the response of the pressurized fresh air supply can be improved as well as that of the fuel supply. Thus, like elements are designated like reference numerals, and detailed descriptions are omitted.

Rearwardly of the front air inlet 45 of the side cover 9 is disposed a radiator 70 parallel to the air cleaner 51. The cooling water, which has cooled down the engine body 12 and returned to the radiator 70 through a return pipe 71, is cooled by the radiator 70, and sent back again to the engine body 12 through a pipe 72, circulating, for cooling, to a cooling water jacket (not shown) in the cylinder head 12 of the engine body 12. On the outer surface of the cylinder 41 are provided air cooling fins for air cooling. This embodiment also has a lot of favorable features such as the first through the fourth advantages described in the first embodiment in addition to the construction defined in the appended claims.

As for the first feature, the air cleaner 51, as shown in Fig. 8, can be disposed on the left side of the engine body 12 and forwardly of the rear wheel transmission 13. In this arrangement, the air cleaner 51 does not obstruct the flow of a running wind, and the pressurized intake air pipe 53 and the intake control valve 251, are exposed to the cool running wind passing through the space between the air cleaner 51 and the radiator 70, which provides higher cooling capacity, thereby effecting improved engine performance and durability. The exhaust pipe 56, the generator 250 etc, are exposed, for cooling, to the running wind.

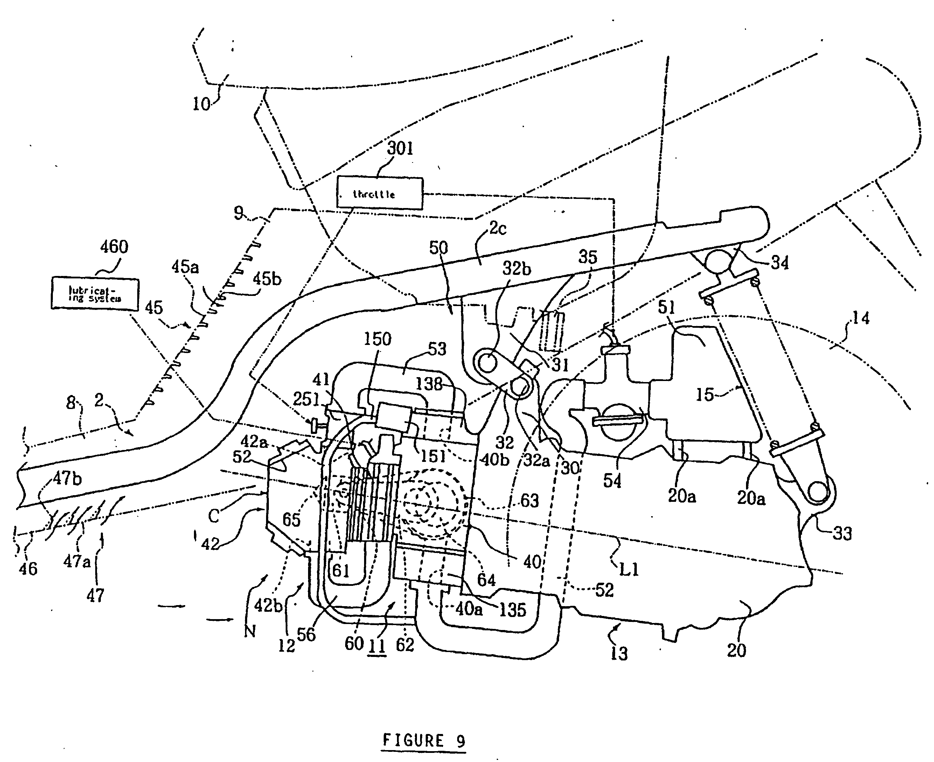

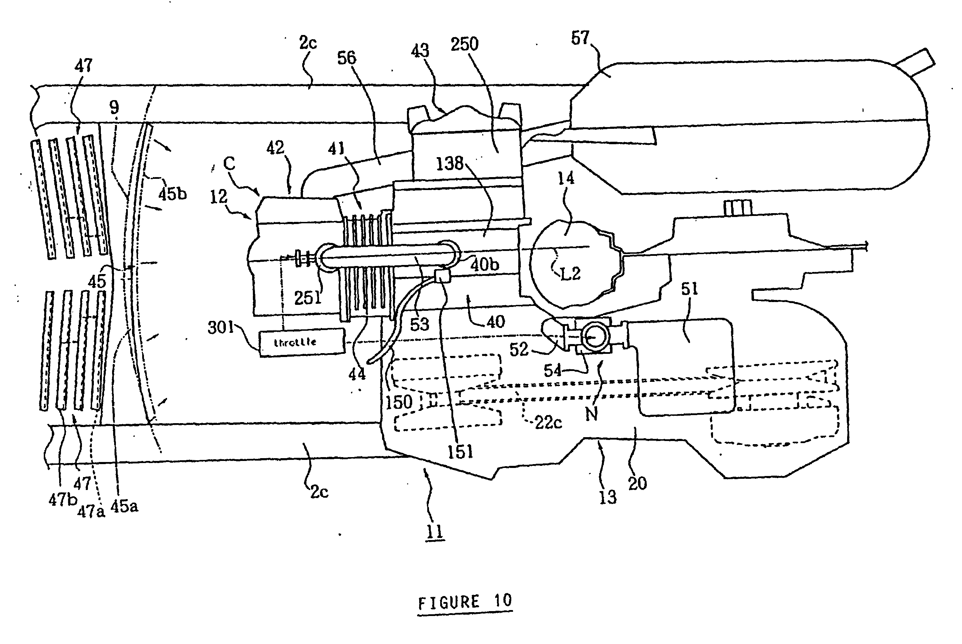

Fig. 9 and Fig. 10 show a third embodiment of the unit-swinging engine unit incorporating an air-cooled four-stroke supercharged engine. Fig. 9 is a side view of the unit-swinging engine unit, and Fig. 10 a plan view of the same. The engine unit 11 of this embodiment has the same construction as the air-cooled engine unit in Fig. 5 and Fig. 6, thus, like elements are designated like reference numerals, and detailed descriptions are omitted, though the location of the air cleaner 51 is different.

The air cleaner 51 is disposed rearwardly of the crank shaft 64 and upwardly of the rear wheel transmission 13 by making use of the space above the rear wheel transmission 13. The air cleaner 51 is fixed to a bracket 20a of the transmission case 20, and adapted to move in one body with the engine unit 11 associated with the swinging movement of the same.

The suction pipe 52 passes through the transmission case 20 of the rear wheel transmission 13 vertically downwardly by making use of the space of the vehicle body further inward from the V-belt 22c. This embodiment also has a lot of favorable features such as the first through the fourth advantages described in the first embodiment in addition to the construction defined in the appended claims. Especially, the air cleaner 51 is not disposed forwardly or upwardly of the engine body 12, so that the pressurized intake air pipe 53, the intake control valve 251 etc, can be cooled down-more reliably, thereby improving engine performance.

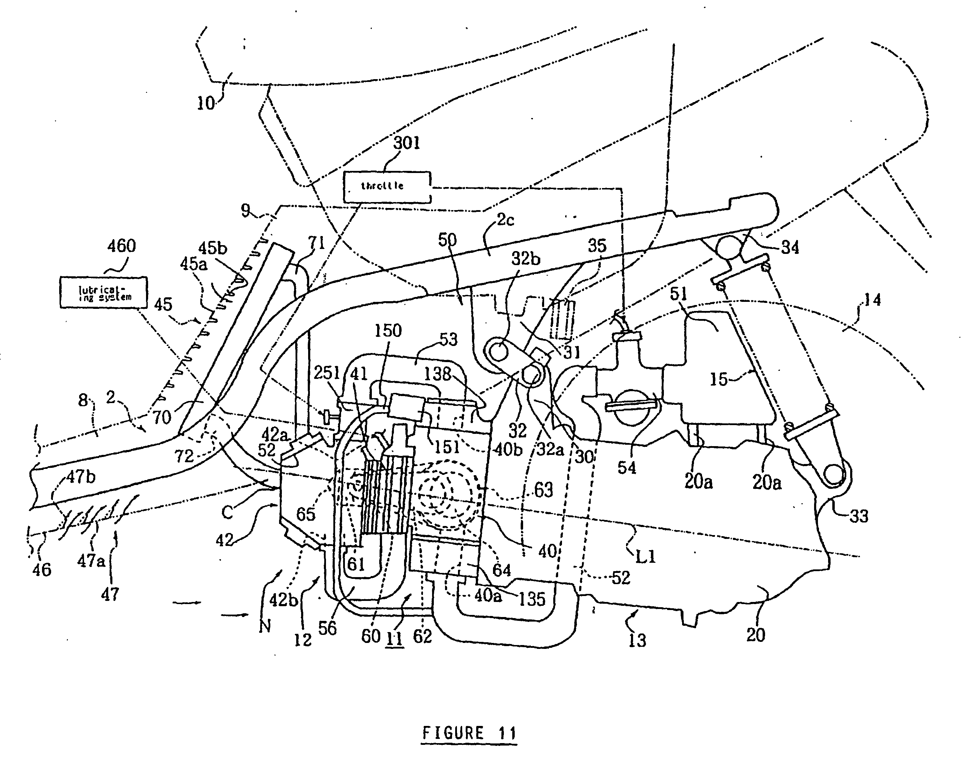

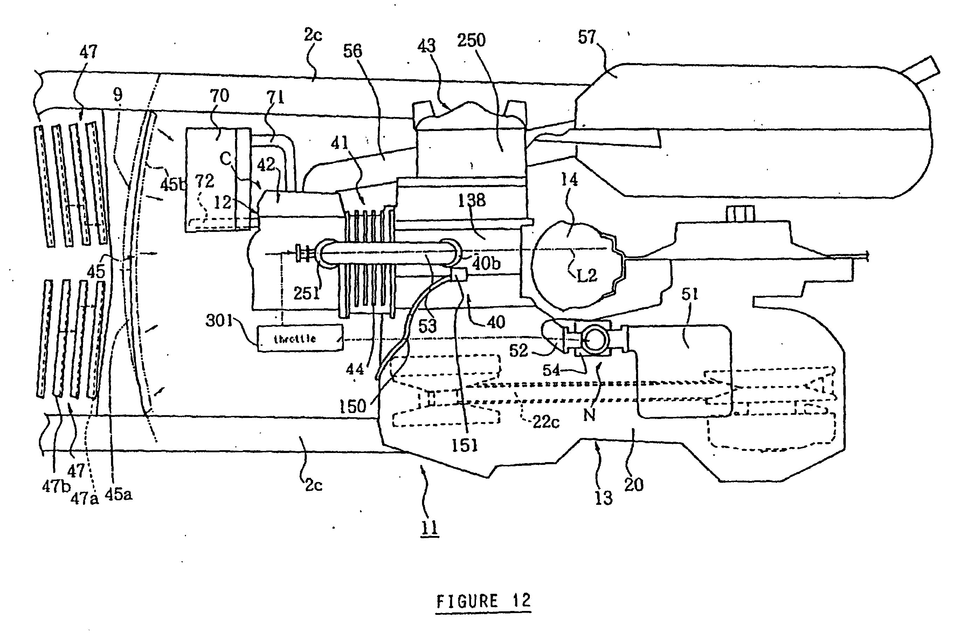

Fig. 11 and Fig. 12 show a fourth embodiment of the unit-swinging engine unit incorporating a water-cooled and partially air-cooled four-stroke supercharged engine, Fig. 11 is a side view of the unit-swinging engine unit, and Fig. 12 a plan view of the same. The engine unit 11 of this embodiment has the same construction as the water-cooled engine unit in Fig. 5 and Fig. 6, thus, like elements are designated like reference numerals, and detailed descriptions are omitted, though the location of the air cleaner 51 is different.

The air cleaner 51 is disposed rearwardly of the crank shaft 64 and upwardly of the rear wheel transmission 13 by making use of the space above the rear wheel transmission 13. The suction pipe 52 passes through the transmission case 20 of the rear wheel transmission 13 vertically downwardly by making use of the space of the vehicle body further inward from the V-belt 22c. The air cleaner 51 is fixed to a bracket 20a of the transmission case 20, and adapted to move in one body with the engine unit 11 in association with the swinging movement of the same.

This embodiment also has a lot of favorable features such as the first through the fourth advantages described in the first embodiment in addition to the construction defined in the appended claims. Especially, the feature of the exhaust pipe 56. the generator 250 etc being exposed, for cooling, to the running wind passing through the radiator 70, is the same as that in the second embodiment. If the radiator 70 is disposed at the same place as the air cleaner 51 in the first embodiment, the exhaust pipe 56, the generator 250 etc, can be exposed, for cooling, to the cool running wind, thereby improving its performance or durability.

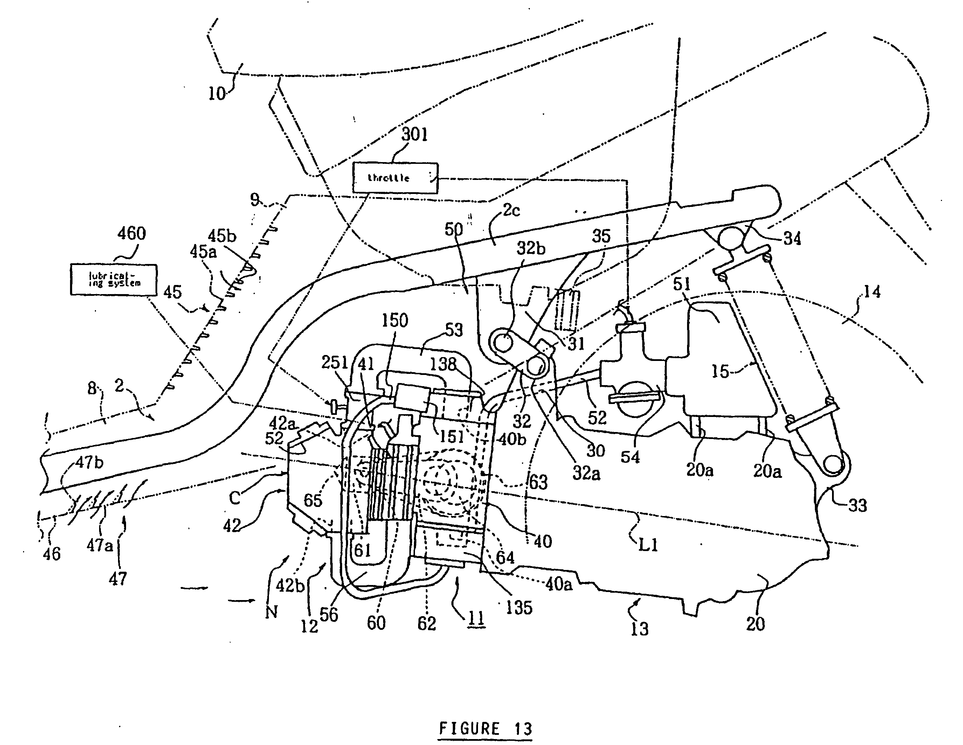

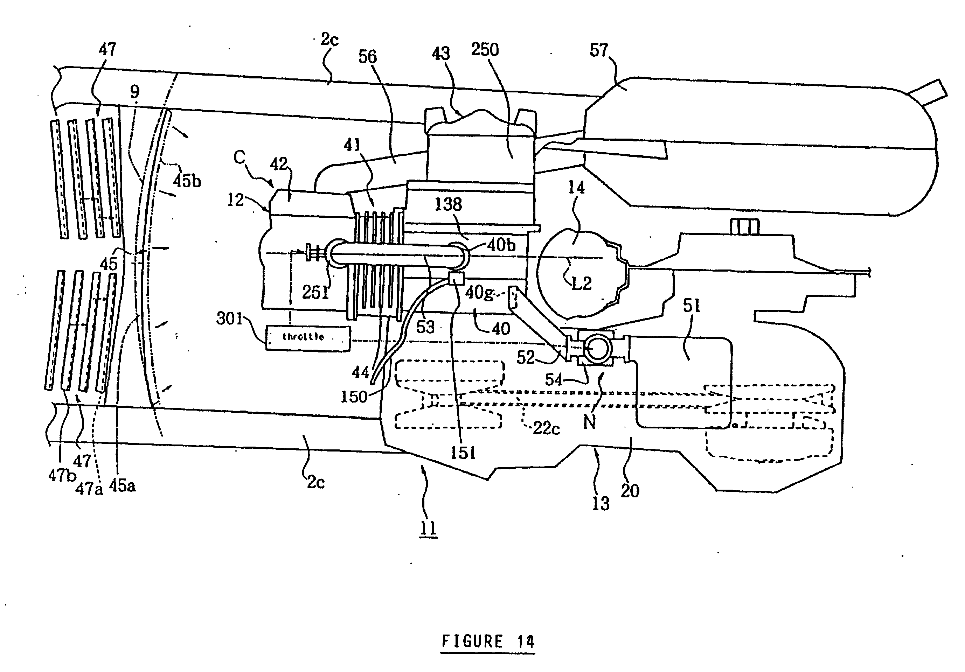

Fig. 13 and Fig. 14 show a fifth embodiment of the unit-swinging engine unit incorporating an air-cooled four-stroke supercharged engine, Fig. 13 is a side view of the unit-swinging engine unit, and Fig. 14 a plan view of the same. The engine unit 11 of this embodiment has the same construction as the air-cooled engine unit in Fig. 9 and Fig. 10, thus, like elements are designated like reference numerals, and detailed descriptions are omitted, though the location of the air cleaner 51 is different.

The air cleaner 51 is disposed rearwardly of the crank shaft 64 and upwardly of the rear wheel transmission 13, and the suction pipe 52, of a flat shape, connected to the air cleaner 51 through the carburetor 54, is connected to the upper rear portion of the crank case 40. Rearwardly of a cam chain 48 in the crank case 40 and sidewardly of the crank chamber 63 is formed a suction path 40g passing through the crank case 40 vertically downwardly, which is open to the suction passage 135 described below. The air cleaner 51 is disposed by making use of the space above the rear wheel transmission 13, and fixed to the bracket 20a of the transmission case 20.

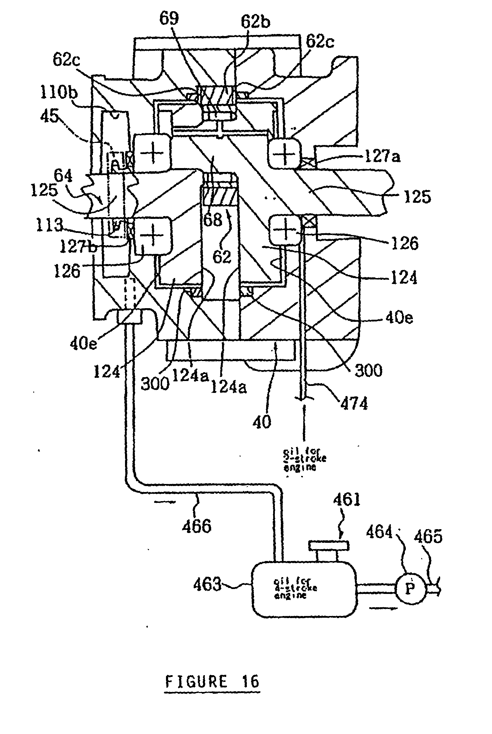

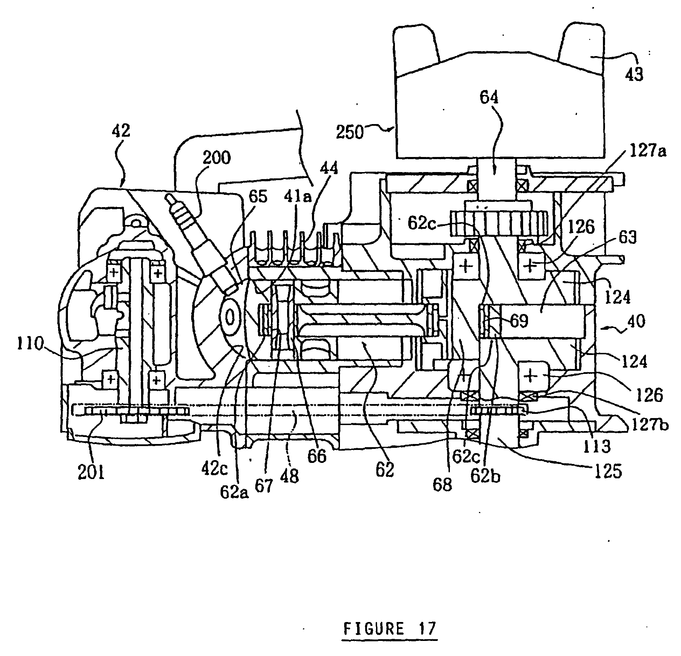

Now, the supercharged engines utilized in the previous embodiments will be described in detail with reference to Fig. 15 through Fig. 17. Fig. 15 is a sectional view of a water-cooled supercharged engine, Fig. 16 a sectional view taken along line XVI-XVI of Fig. 15 (the cooling system is different from the engine of Fig. 15. and shown as an air-cooled supercharged engine), and Fig. 17 a sectional view taken along line XVII-XVII of Fig. 15.

In the figures, numeral 100 designates a laterally laid crank shaft type four-stroke single cylinder crank chamber supercharged engine. On the mating face of a crank case 40 of this engine 100 is mounted a cylinder block 41, and on the mating face of the cylinder block 41 is mounted a cylinder head 42. In the mating portion of the cylinder head 42 facing a cylinder bore 60 is formed a recess 42c constituting a combustion chamber 65, and in the recess 42c is inserted an ignition plug 200. In the water-cooled supercharged engine of Fig. 15, the cylinder block 41 and the cylinder head 42 are provided with their respective cooling water jackets, but in the air-cooled supercharged engine of Fig. 16, the cylinder block 41 and the cylinder head 42 are provided with their respective plurality of fins on their outer surfaces. Embodiments shown in Fig. 7 and Fig. 8, Fig. 11 and Fig. 12, Fig. 13 and Fig. 14, Fig. 20 and Fig. 21, and Fig. 28 and Fig. 29, utilize a water-cooled and partially air-cooled supercharged engine with a water-cooled cylinder head 42 and an air-cooled cylinder block 41, but they may utilize a water-cooled supercharged engine with a cylinder head 42 and a cylinder block 41 both water-cooled.

To the recess 42c of the cylinder head 42 are open an intake port 105 and an exhaust port 106; the intake port 105 is led to the upper wall side of the cylinder head 42, and the exhaust port 106 to the lower wall side of the same. An intake valve 107 is disposed in the opening of the intake port 105 at the combustion chamber side, and an exhaust valve 108 in the opening of the exhaust port 106 at the combustion chamber side, for opening/closing of respective openings. The intake valve 107 and the exhaust valve 108 are biased toward valve closing by valve springs 109, respectively.

In the cylinder head 42 is disposed, in the direction perpendicular to the plane of the drawing, a cam shaft 110, or a valve drive mechanism for opening/closing the intake valve 107 and the exhaust valve 108. The can shaft 110 is provided, at one end, with a driven sprocket 201, which is connected, through a cam chain, to a drive sprocket 113 coupled to the crank shaft 64, and the rotating speed of the cam shaft 110 is reduced to half that of the crank shaft 64. At both upper and lower sides of the cam shaft 110 are disposed a pair of rocker shafts 111 extending parallel to the cam shaft, and on the rocker shafts 111 are fitted rocker arms 112 for rocking movement. The rocker arms 112 are in contact, at one ends, with cam noses of the cam shaft, and at the other ends, with the top ends of the intake valve 107 and the exhaust valve 108, respectively.

In the cylinder bore 60 of the cylinder block 41 is disposed a piston 61 for sliding movement. On the opposite side of the piston 61 from the combustion chamber 65 is defined a crank chamber 63 by the cylinder bore 60 and the crank case 40. To the piston 61 is connected a small end 62a of the connecting rod 62 through a piston pin 66 and a bearing 67, and a large end 62b of the connecting rod 62 is connected to a crank pin 68 of the crank shaft 64 through a bearing 69.

The crank shaft 64, which is housed in the crank chamber 63, is so arranged that a pair of disk-like crank webs 124 are connected together by a crank pin 68, and the crank webs 124 are formed integrally with their respective journal sections 125, which are supported on the crank case 40 through journal bearings 126. The journal sections 125 protrude outwardly from the crank case 40, and on one protruded journal end is mounted a generator 250. Numerals 127a, 127b on the right side of the crank chamber 63 designate oil seals.

Right and left inside walls 40c of the crank case 40 perpendicular to the crank shaft 64, and cutouts 41b formed on both inner and outer sides of a fitting section 41a (viewed from above the drawing) of the cylinder block 41 to the crank case 40, are arranged in flush relation, and in the space surrounded by these right and left inside walls 40c and the cutouts 41b, the connecting rod 62 is adapted to move, with its right and left sides 62c facing, in a slight clearance relation, to these walls 40c and cutouts 41b, respectively, or to be in contact, on both sides for sliding, with the same walls 40c and cutouts 41b. The large end 62b of the connecting rod 62 is adapted to move in the crank case 40, with its outside circumferential surface facing, in a slight clearance relation, to an arc inside circumferential wall 40d surrounding the crank shaft 64, or to be in contact, for sliding, with the same wall 40d. In each of right and left inside walls 40c of the crank case 40 is formed a circular recess 40e for receiving crank web 124, and a slight clearance is provided between the circular recess 40e and the crank web 124. The connecting rod 62 is also adapted to move in the crank case 40, with its right and left sides 62c facing, in a slight clearance relation, to the connecting rod side walls 124a of the right and left crank webs 124, respectively, or to be in contact, for sliding, with the same walls 124a. On the crank case at the mouth of each of right and left circular recesses 40e is mounted fixedly a ring 300, which is adapted to be in contact, for sliding, with the outside circumferential surface of the crank web 124, or to face, with substantially zero clearance, to the same surface. The ring 300 is made of material such as plastic, rubber, or carbon. The inside circumference of the ring 300 is fabricated a little smaller than required. Therefore, it is able to come into contact with the circumference of the crank web 124 without clearance by deforming or being abraded even if there may be inaccuracy in production.

The piston 61 is provided with a recess 61a of a generally triangular shape at the skirt section, and the portion of the piston where the recess 61a meets the outside circumference of the piston skirt, forms a cutout 61b. Inside the recess 61a is inserted a small end 62a of the connecting rod 62, which is adapted to move in the recess 61a, with its outside circumferential surface facing to the inside circumferential surface of the recess 61a and with its right and left side surfaces 62c to the right and left side surfaces of the recess 61a, in a slight clearance relation, respectively, or to be in contact with corresponding surfaces of the recess 61a, for sliding.

As described above, the region surrounded by the crank chamber 63, crank webs 124, and piston 61, constitutes a connecting rod housing. At any crank angle except when the piston 61 is located near the top dead center, the connecting rod 62 is fitted closely in the space surrounded by the right and left inside walls 40c of the crank case 40 or the cutouts 41b of the cylinder block, so that the connecting rod housing is divided into a suction chamber A and a compression chamber B. When the piston 61 is at the top dead center, no fitting is provided between the connecting rod 62 and the right and left inside walls 40c, but the end position of the piston skirt coincides substantially with that of the cylinder bore 60, so that the separation between the suction and compression chambers A, B is maintained. Therefore, as the crank shaft 64 rotates counterclockwise after the piston has reached the top dead center, the connecting rod 62, as shown in Fig. 6, moves from the position shown by a single dot and dash line through the position shown by a double dot and dash line to the position shown by a solid line, and thus a volumetric supercharger is constituted in which air is drawn as a result of the volume increase in the suction chamber A, and the air drawn in the preceding process is compressed as a result of the volume reduction in the compression chamber B. The related construction is disclosed in detail in the previously described Japanese Unexamined Patent Publication Hei 6-93969.

On the bottom of the crank case 40 is formed integrally a suction passage 135 in communication with the suction chamber A and open downward. In the front wall is formed a crank chamber suction port 40a for communication with the suction passage 135, to the crank chamber suction port 40a is connected the downstream end of a suction pipe 52, and to its upstream end is connected an air cleaner 51.

On the top of the crank case 40 is formed integrally a pressurized intake air passage 138 in communication with the compression chamber B and open upward, and in the pressurized intake air passage 138 is formed integrally a partition 139 for separating the passage 138 from the compression chamber B. In the partition 139 is formed a valve opening 140 for providing communication between the pressurized intake air passage 138 and the compression chamber B, and the opening area of the valve opening 140 is set at a value large enough to provide a sufficiently small passage resistance.

The pressurized intake air passage 138 has a predetermined volume larger than that of the cylinder stroke, stores the pressurized fresh air sent from the compression chamber B for every rotation of the crank shaft 64, and serves as an accumulator for supplying the pressurized intake air to the combustion chamber 65 for every two rotations of the crank shaft 64.

On the outside surface of the partition 137 is provided a reed valve 142 for opening/closing the valve opening 140. The upper end opening of the pressurized intake air passage 138 is covered by a cover plate 145, and the cover plate 145 and the pressurized intake air passage 138 constitute the accumulator. To the cover plate 145 is connected the upstream end of a pressurized intake pipe 53 in communication with the pressurized intake air passage 138, and the downstream end of the pressurized intake pipe 53 is connected to an intake port 105 of the cylinder head 42. Besides the reed valve 142, on the suction passage side of the crank chamber suction port 40a, may be disposed a reed valve for allowing the fresh air flow toward the crank chamber and blocking the back flow. If the reed valve is provided on the suction passage side, the reed valve 142 may be eliminated.

The pressurized intake air passage 138 and the suction passage 135 are in communication to each other through a bypass pipe 150 disposed outside the engine 100. The bypass pipe 150 is opened/closed by a bypass valve 151. The bypass valve 151 is opened/closed in association with a throttle 301, and when the throttle opening is small, for example, the bypass pipe 150 is opened to decrease the pressure in the pressurized intake air passage 138.

In the middle of the pressurized intake air pipe 53 is provided an intake control valve 251, which regulates the suction volume to the combustion chamber according to the engine conditions. To the air cleaner 51 is fitted a carburetor 54 constituting a fuel supply system N. The carburetor 54 is comprised of a carburetor body 401, and a float chamber 402 as a fuel collector bolted to the carburetor body.

To the carburetor body 401 is inserted, for axial sliding movement, a variable piston valve 405 of a cylindrical shape with a bottom. To the piston valve 405 is connected one end of a throttle cable 407, the other end of which is connected to the throttle 301. The piston valve 405 is moved vertically through operation of the throttle 301, causing a venturi section 403 to change its passage area from closed to wide open. A needle 412 is adapted to advance and retreat with the up and down movement of the piston valve 405, which regulates the amount of fuel drawn into the venturi passage of the venturi section 403.

To the carburetor body 401 is connected one end of a pressurized pipe 426, the other end of which is connected, for communication, to the pressurized intake air passage 138 through the cover plate 145. Thus. supercharge pressure in the pressurized intake air passage 138 is applied to the liquid surface in a float chamber 402.

The pressurized pipe 426 is branched, in the middle, into two routes of a first and a second pressurized passage 426a, 426b. The first and the second passage 426a, 426b are formed with choke sections 430a, 430b with a large and a small choke hole, respectively. Upstream of the choke section 430a in the first pressurized passage 426a is provided a solenoid valve 431 for opening/closing the first pressurized passage 426a, and the solenoid valve 431 is controlled for opening/closing by a CPU 432.

The CPU is so arranged as to read engine speed and throttle opening, and to control the solenoid valve 431 such that when idling, valve opening of the solenoid valve 431 is changed to a closed position in the low engine speed area, and to a wide open position in the intermediate-high engine speed area. Therefore, in the low suction air volume operating area such as idling, supercharge pressure is reduced significantly by the small choke hole 430b, but in the high suction air volume operating area such as high engine speed, the supercharge pressure is reduced less by the large choke hole 430a than with the small choke hole 430b.

Numeral 460 designates a lubricating system, which is comprised of a first lubricating system 461 and a second lubricating system 462 provided separately from the first one. The first lubricating system 461 is so arranged that a feed pump 464 is mounted to a first storage tank 463 filled with four-cycle oil, to which is connected an oil feed pipe 465, and a feed port 465a of the feed pipe 465 is connected to the cam shaft section constituting the valve drive mechanism of the cylinder head 42. After lubricating the cam shaft section, the oil is returned to a chain room 110b enclosing the cam chain 48, where the cam chain 48, the drive sprocket 113, and the driven sprocket 201 are lubricated, and then collected into the first storage tank 463 through a collecting pipe 466.

The second lubricating system 462 is so arranged that a main feed pipe 471 and a forced feed pump 472 are connected to a second storage tank 470 filled with two-cycle oil; a first and a second sub-feed pipe 473, 474 are connected to the forced feed pump 472; the first sub-feed pipe 473 is connected to the piston sliding portion in the cylinder block 41; and the second sub-feed pipe 474 is connected to the journal bearing section (right and left journal bearings 126).

The forced pump 472 (not shown) is an electromagnatic automatic lubricating type pump with a modified solenoid, in which an armature is mounted fixtedly on a push rod of a plunger, and the armature is adapted to be attracted by the solenoid. This modification provides a higher delivery pressure of the forced feed pump 472, securing lubricating oil supply against the supercharge pressure.

The first sub-feed pipe 473 passes through the liner portion of the cylinder block 41 in the direction perpendicular to the crank shaft 64, and an oil delivery port 473a is located in the cylinder block on the crank chamber side from the second piston ring 350 of the piston 61 at the bottom dead center. In the outer surface of the piston 61 on the crank chamber side from the second piston ring 350 is formed two recesses 475, 476 for holding oil cut out parallel to each other. Lubrication is performed of the cylinder during the time the piston 61 blocks the delivery port 473a, with the oil supplied from the delivery port 473a and held in the recess 475 when the recess 475 coincides with the delivery port 473a during piston movement, and with the oil supplied from the same port 473a and held in the recess 476 in a manner described below. As a result, the lubrication problem caused by the piston 61 blocking the delivery port 473a, is prevented by the delivery port 473a.

In the outside circumferential surface of the small end 62a of the connecting rod 62 is formed an oil guide groove 481 extending circumferentially, and in the piston 61 is formed a communication hole 477 for providing communication between the guide groove 481 and the recess 476 on the underside. On the side of the small end 62a opposite to that in which the communication hole 477 is provided, is formed a communication hole 478 in communication with a piston pin 66 and a bearing 67. Thus, part of the lubricating oil in the guide groove 481 fed from the delivery port 473a and an oil collecting hole 480 described below, is supplied to the bearing 67 from the communication hole 478, and part of the rest is supplied to the sliding surfaces between the small end 62a and the piston 61 and further, to the recess 476.

The second sub-feed pipe 474 passes through the crank case 40, and leads to the journal bearing 126 on the right side of Fig. 17. The lubricating oil fed to the journal bearing 126, is supplied to the inside and inside circumferential walls 40c, 40d, the clearance between the circular recesses 40e and the crank shaft 64, and other sliding surfaces.

In the cylinder block is formed a collecting hole 480, and further, a collecting passage 483 is formed in a cover 136 fitted to the crank case at the bottom. To the collecting passage 483 is connected a collecting pipe 484, which is connected to the second storage tank 470.

According to this arrangement, after lubricating respective sliding surfaces, the oil supplied from the first and second sub-feed pipes 473, 474, is accumulated on the upper side of the cover 136 in the suction passage 135, for collection. This embodiment is so arranged that the engine 100 is laid laterally, the compression chamber B at high supercharge pressure is disposed upwardly, and the air is drawn from under the crank case 40. Therefore, interaction between gravity and supercharge pressure causes the lubricating oil to accumulate in the lowermost portion of the crank case 40, so that oil collection is assured, thus providing recycling of the lubricating oil. In the crank case 40, with an oil seal 127b on the left side of Fig. 17 as a boundary, the crank chamber side is lubricated with two-cycle oil and the chain room side with four-cycle oil.

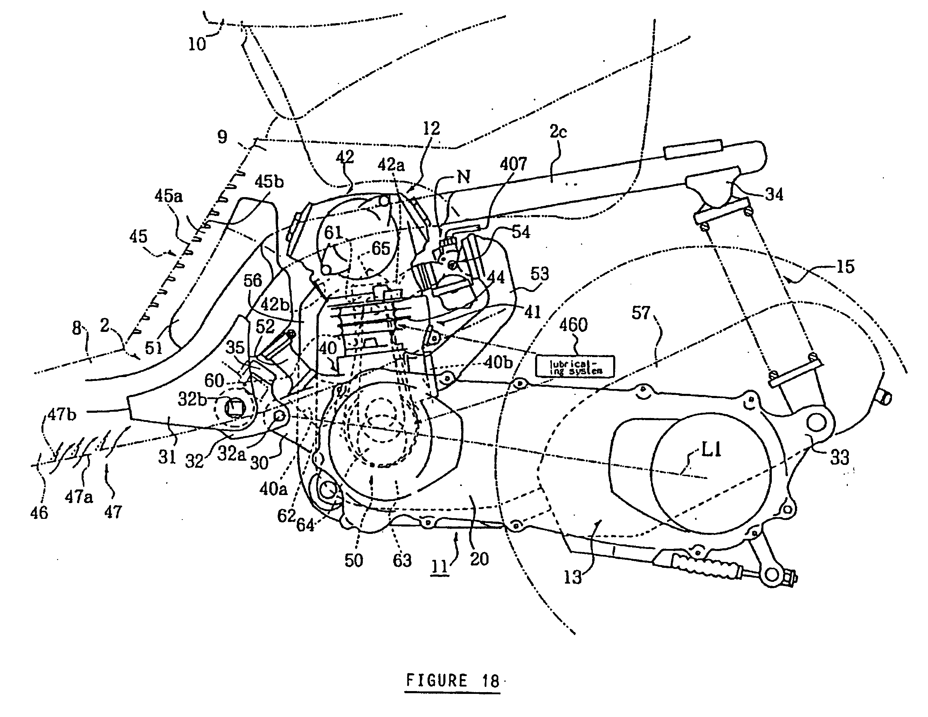

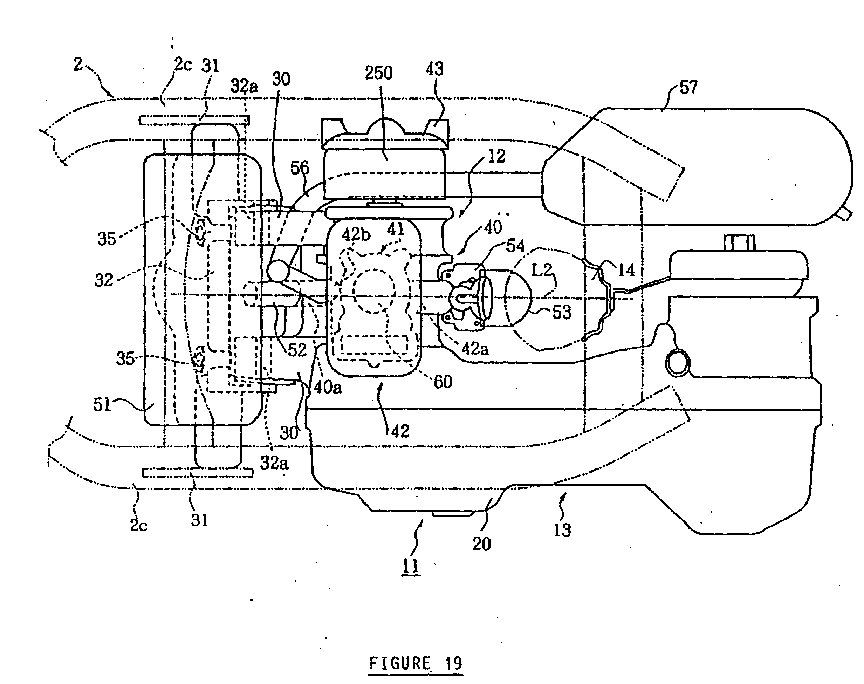

Now, the general construction of a sixth embodiment of the unit-swinging engine unit 11 is described. Fig. 18 and Fig. 19 show a sixth embodiment of the unit-swinging engine unit incorporating an air-cooled four-stroke supercharged engine, Fig. 18 is a side view of the unit-swinging engine unit, and Fig. 19 a plan view of the same.

The unit-swinging engine unit 11 is mounted downwardly of the upper bent portion of the right and left side frames 2c. This engine unit 11 is so arranged that a bracket 30 provided at the front of the transmission case 20 of the rear wheel transmission 13, and a bracket 31 of the side frames 2c, are connected by a link 32; a bracket 33 provided at the rear of the transmission case 20 and a bracket 34 of the side frames 2c, are connected by the rear suspension 15; and the engine unit 11 is adapted to be swingable about the pivot shaft 32a between the link 32 and the bracket 30. Between the bracket 31 and the link 32 is interposed a resilient bush (not shown), which prevents the excessive turning movement of the link 32 around the support shaft 32b.

Also, a stopper 35 is provided for restricting the upward swinging movement of the rear transmission 13. The stopper prevents the engine body 12 from interfering other components by engaging one side of the link 32 when a stand 11a mounted pivotally on the engine unit 11 is raised to support the vehicle body with the engine unit 11 being pushed up and the link 32 being turned upward.

The engine body 12 is of a forced air cooling four-stroke single cylinder type, which is so arranged that to a crank case 40 are connected a cylinder block 41 and a cylinder head 42. In a cylinder bore 60 of the cylinder block 41 is inserted for sliding movement a piston 24, which is connected through a connecting rod 62 to a crank shaft 64 disposed in a crank chamber 63.

The engine body 12 is fitted with a forced cooling fan 43 for supplying cooling air, and the cylinder block 41 is provided with cooling fins 44 for increasing radiating areas. The cylinder head 42 is also provided with cooling fins (not shown). The side cover 9 under the seat 10 is provided with a front air inlet 45, which is comprised of slits 45a and a louver 45b, and a running wind is induced from the front toward the engine body 12. In a bottom cover 46 under the foot board 8 is provided a bottom air inlet 47, which is comprised of slits 47a and a louver 47b, and a running wind is induced from the underside toward the engine body 12.

The engine body 12 is provided with a connecting rod type supercharge system 50. The air filtered by an air cleaner 51 is drawn from a crank chamber suction port 40a on the front side of the crank case 40 into the crank chamber 63 through a suction pipe 52. Air pressurized by the connecting rod type supercharging mechanism in the engine body 12, is supplied to a carburetor 54 constituting a fuel supply system N from a crank chamber delivery port 40b on the rear side of the crank case 40 through a pressurized intake air pipe 53 constituting a pressurized intake air path. Fuel is supplied to the combustion chamber 65 from the suction port 42a on the rear side of the cylinder head 42 through the carburetor 54 and the pressurized intake air pipe 55. Numeral 407 in the figure designates a throttle cable for controlling the carburetor 54.

Since the engine unit 11 changes its position during running, a flexible component is arranged for a part or the entire portion of the suction pipe 52 between the air cleaner 51 which is fixed to the vehicle body, and the engine body 12. The carburetor 54 is mounted fixedly on the cylinder block 41 or the cylinder head 42 through a damping rubber mount (not shown). Therefore, a flexible component is likewise arranged for a part or the entire portion of the pressurized intake air pipe 53, 55. Associated with the displacement of the engine unit 11 during running, the carburetor 54, the pressurized intake air pipe 53, and an exhaust pipe 56 described below, will change their position substantially integrally with the engine body 12.

To an exhaust outlet 42b on the front side of the cylinder head 42 is connected the exhaust pipe 56, which extends downwardly at the front side of the engine unit 11 and further, rearwardly at the lower right side of the same, and the rear end of which is connected a muffler 57.

The engine body 12 is also provided with a lubricating system 460, which draws and pressurizes two-cycle lubricating oil, and the pressurized lubricating oil is supplied to the bearings around a crank shaft 64, piston sliding portions in the cylinder block 41 etc. To the drive valve system in the cylinder head 42 is supplied circulatively four-cycle lubricating oil by a lubricating system (not shown).

In this embodiment, the carburetor 54 and pressurized intake air pipe 53 constitute a pressurized intake air path for supplying compressed fresh air to the combustion chamber 65 from the crank chamber 63, and the flow of intake air in this pressurized intake air path is directed upwardly, so that lubricating oil supplied to the sliding portions of the piston 61 or the bearings around the crank shaft 64, is prevented from entering into the combustion chamber 65 and collected in the crank case 40, contributing to the lubrication of the components to be lubricated such as piston sliding portions, large and small end bearings of the connecting rod 62, and bearings around the crank shaft 64, thereby reducing the lubricating oil supply as well as the lubricating oil consumption. This embodiment has a lot of favorable features due to the unique construction in addition to that defined in the appended claims, as described below.

First, at the rear side of the cylinder C is disposed integrally the carburetor 54, pressurized intake air pipes 53, 55 etc which constitute the pressurized intake air path for supplying compressed fresh air to the combustion chamber 65 from the crank chamber 63; the suction pipe 52 is disposed at the front side of the cylinder C and integrated with the same in one unit; and the bracket 30 on the front side of the transmission case 20 of the rear wheel transmission 13 is supported by the bracket 31 of the side frames 2c through the link 32 so as to form a front mounting structure. As a result, manpower required for mounting the engine unit 11 on the vehicle body can be reduced with easy assembly work.

Secondly, the carburetor 54 constituting the fuel supply system N is disposed inclining downwardly toward the downstream side, which prevents the fuel fed from the carburetor 54 from being deposited inside the pressurized intake air pipe 55 and supplied to the combustion chamber 65 in the form of a lump, thereby reducing HC emissions in the exhaust gas and avoiding unfavorable influence on the engine performance.

Thirdly, the air cleaner 51, suction pipe 52, crank chamber 63, pressurized intake air pipe 53, and carburetor 54, are disposed on a line along the cylinder axis L2 in plan view, so that the degree of bend in the intake air passage is small, thereby reducing flow path resistance and thus improving charging efficiency as well as engine performance.

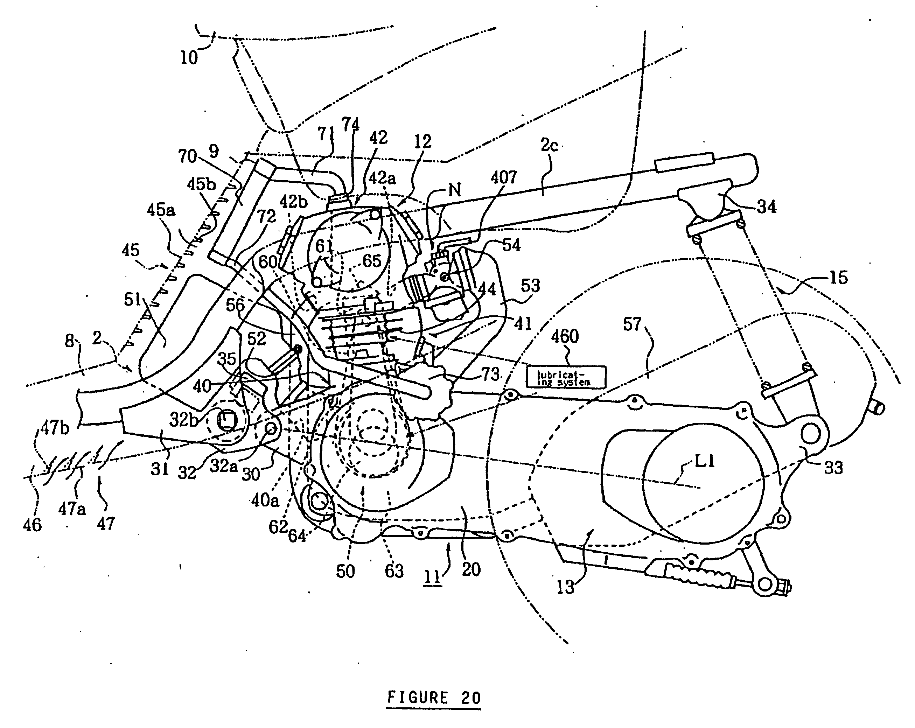

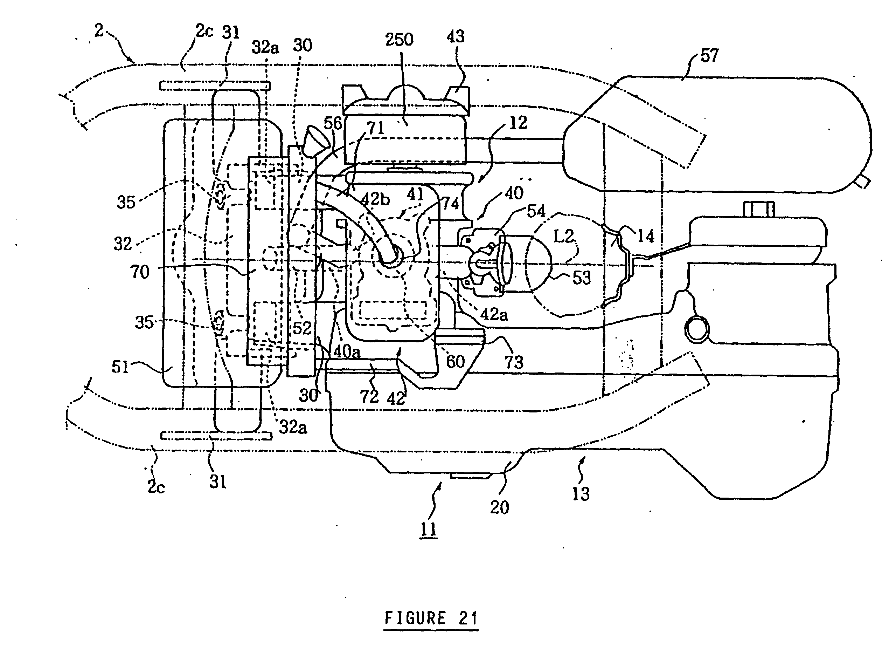

Fig. 20 and Fig. 21 show a seventh embodiment of the unit-swinging engine unit incorporating a water-cooled and partially air-cooled four-stroke supercharged engine, Fig. 20 is a side view of the unit-swinging engine unit, and Fig. 21 a plan view of the same. The engine unit 11 of this embodiment has the same construction as the preceding one except that the air-cooled engine in Fig. 18 and Fig. 19 is replaced by a water-cooled type, thus, like elements are designated like reference numerals, and detailed descriptions are omitted.

Rearwardly of the front air inlet 45 of the side cover 9 is disposed a radiator 70 parallel to and upwardly of the air cleaner 51. The cooling water, which has cooled down the engine body 12 and returned to the radiator 70 with the help of a water pump 73 through a return pipe 71, is cooled by the radiator 70, and sent back again to the engine body 12 through a pipe 72, circulating, for cooling, to a cooling water jacket (not shown) in the cylinder head 12 of the engine body 12. on the top of the cylinder head 42 is disposed a thermostat 74, which serves to improve starting characteristics of the engine in such a manner that cooling water is returned to the return pipe 71 when its temperature reaches to a given value. On the outer surface of the cylinder 41 are provided air cooling fins for air cooling. This embodiment also has a lot of favorable features such as the first through the fourth advantages described in the first embodiment in addition to the construction defined in the appended claims.

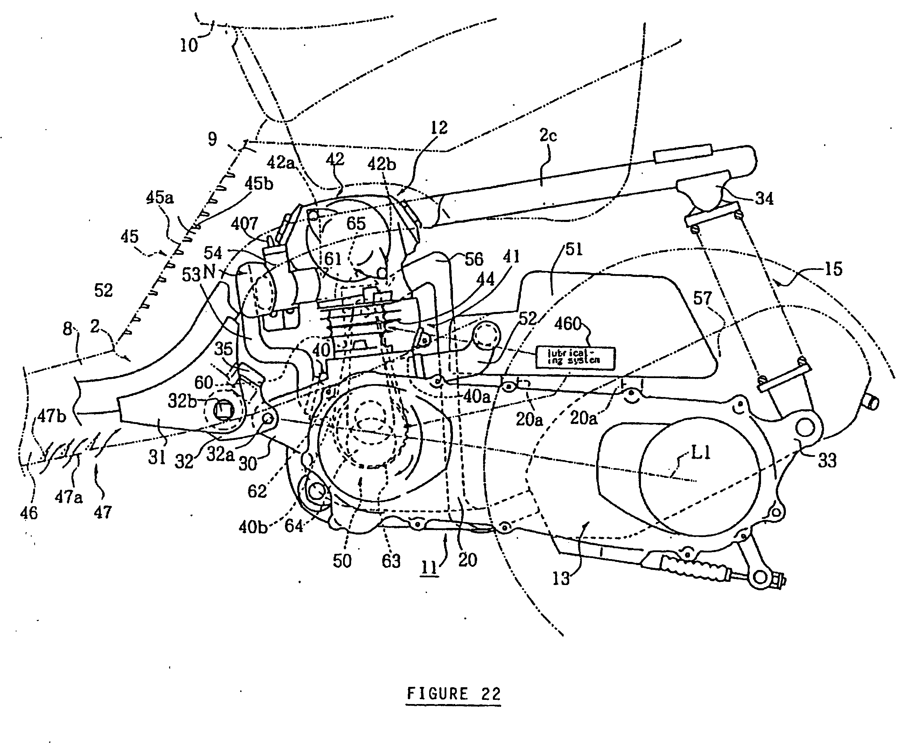

Now, still another embodiments are described of the unit-swinging engine unit incorporating a supercharged engine with reference to Fig. 22 through Fig. 37. In these embodiments, unlike the foregoing ones, the crank shaft rotates in the direction shown by the arrow.

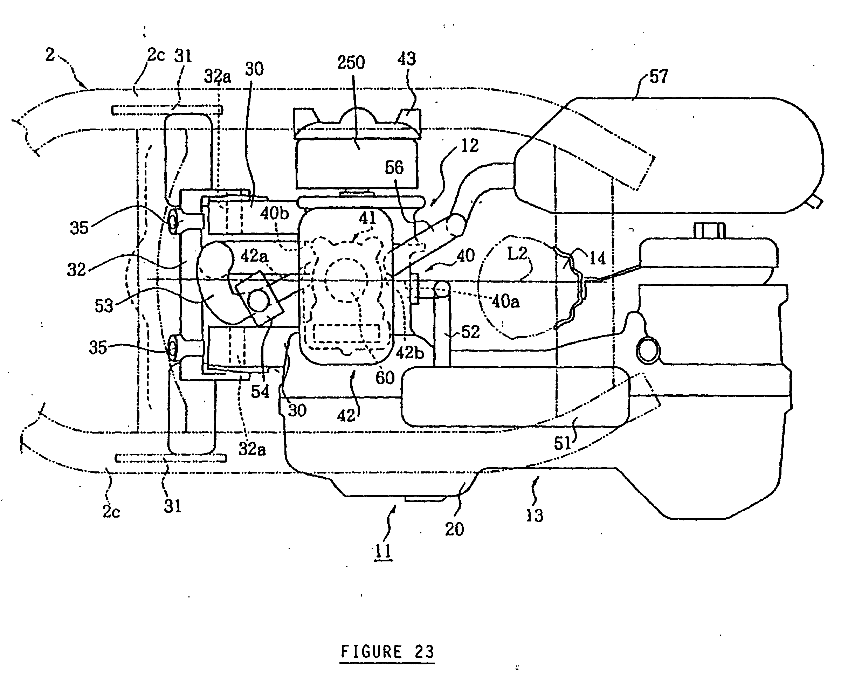

Fig. 22 and Fig. 23 show an eighth embodiment of the unit-swinging engine unit incorporating an air-cooled four-stroke supercharged engine, Fig. 22 is a side view of the unit-swinging engine unit, and Fig. 23 a plan view of the same. In the engine unit 11 of this embodiment, the air filtered by an air cleaner 51 is drawn from a crank chamber suction port 40a on the rear side of the crank case 40 into the crank chamber 63 through a suction pipe 52. Air pressurized by the connecting rod type supercharging mechanism in the engine body 12, is supplied to a carburetor 54 constituting a fuel supply system N from a crank chamber delivery port 40b on the front side of the crank case 40 through a pressurized intake air pipe 53 constituting a pressurized intake air path. Fuel is supplied to the combustion chamber 65 from a suction port 42a on the front side of the cylinder head 42 through the carburetor 54 and the pressurized intake air pipe 55. The air cleaner 51 is disposed rearwardly of the cylinder C, and supported by the bracket 20a of the transmission case 20 in the rear wheel transmission 13.

To an exhaust outlet 42b on the rear side of the cylinder head 42 is connected an exhaust pipe 56, which extends downwardly at the rear side of the engine unit 11 and further, rearwardly at the lower right side of the same, and the rear end of which is connected a muffler 57.

In this embodiment, the crank shaft 64 rotates in the direction shown by the arrow, and at the front side of the cylinder C is disposed the pressurized intake air path which is constituted by the carburetor 54, pressurized intake pipes 53, 55 etc for sending pressurized fresh air to the combustion chamber 65 from the crank chamber 63, the flow of intake air in this pressurized intake air path being directed upwardly, so that lubricating oil supplied to the sliding portions of the piston 61 or the bearings around the crank shaft 64, is prevented from entering into the combustion chamber 65 and collected in the crank case 40, contributing to the lubrication of the components to be lubricated such as piston sliding portions, large and small end bearings of the connecting rod 62, and bearings around the crank shaft 64, thereby reducing the lubricating oil supply as well as the lubricating oil consumption. This embodiment has a lot of favorable features due to the unique construction in addition to that defined in the appended claims, as described below.

First, at the front side of the cylinder C is disposed integrally the carburetor 54, pressurized intake air pipes 53, 55 etc which constitute the pressurized intake air path for supplying compressed fresh air to the combustion chamber 65 from the crank chamber 63; the suction pipe 52 is disposed at the rear side of the cylinder C and integrated with the same in one unit; and the bracket 30 on the front side of the transmission case 20 of the rear wheel transmission 13 is supported by the bracket 31 of the side frames 2c through the link 32 so as to form a front mounting structure. As a result, manpower required for mounting the engine unit 11 on the vehicle body can be reduced with easy assembly work.

Secondly, the pressurized intake air path constituted by the carburetor 54, pressurized intake air pipe 53, 54 etc, is disposed at the front side of the cylinder C, so that the air cleaner 51 does not obstruct the flow of a running wind, and the cool air of the running wind blows against the pressurized intake air pipe 53, or the passage of the fresh air at a high temperature pressurized in the crank case 40, the carburetor 53, and the intake control valve 251, which provides higher cooling capacity, thereby effecting improved engine performance and durability due to higher charging efficiency. The cooling capacity of the exhaust pipe 56 and a generator 250 is also increased, thereby improving durability.

Thirdly, the relatively weighty carburetor 54 is disposed at the front side of the cylinder C and upwardly of the front mounting device, that is, in the vicinity of the same, so that the vibration of the carburetor 54 can be reduced.

Fourthly, the carburetor 54 is disposed at the front side of the cylinder C, so that idling adjustment of the carburetor 54 can be made easily from the front only by removing the front cover 80, thereby improving serviceability.

Fifthly, the carburetor 54 constituting the fuel supply system N is disposed inclining upwardly toward the downstream side, which prevents the fuel supplied from the carburetor 54 from being deposited inside the pressurized intake air pipe 55 to be supplied to the combustion chamber 65, thereby reducing HC emissions in the exhaust gas and avoiding unfavorable influence on the engine performance.

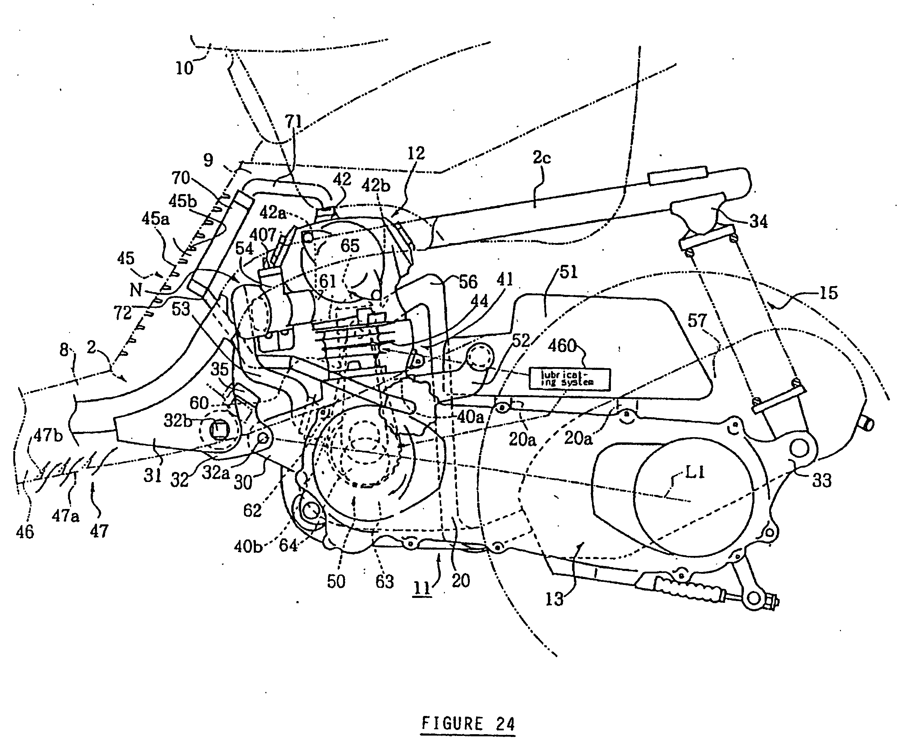

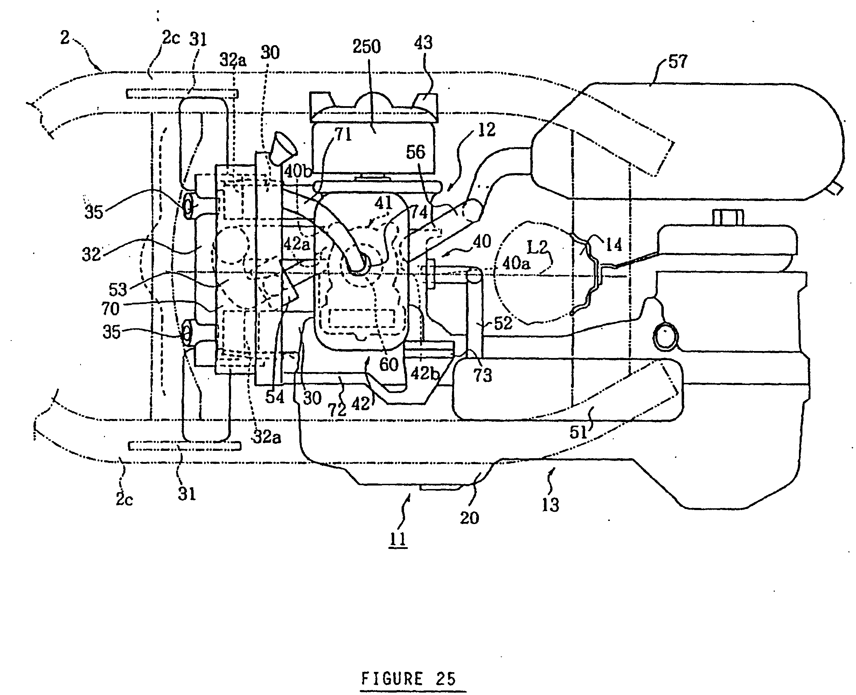

Fig. 24 and Fig. 25 show a ninth embodiment of the unit-swinging engine unit incorporating a water-cooled and partially air-cooled four-stroke supercharged engine, Fig. 24 is a side view of the unit-swinging engine unit, and Fig. 25 a plan view of the same. The engine unit 11 of this embodiment has the same construction as the preceding one except that the radiator 70 is disposed at the front side of the cylinder C, and the air cleaner 51 rearwardly of and at the left side of the cylinder C, thus, like elements are designated like reference numerals, and detailed descriptions are omitted.

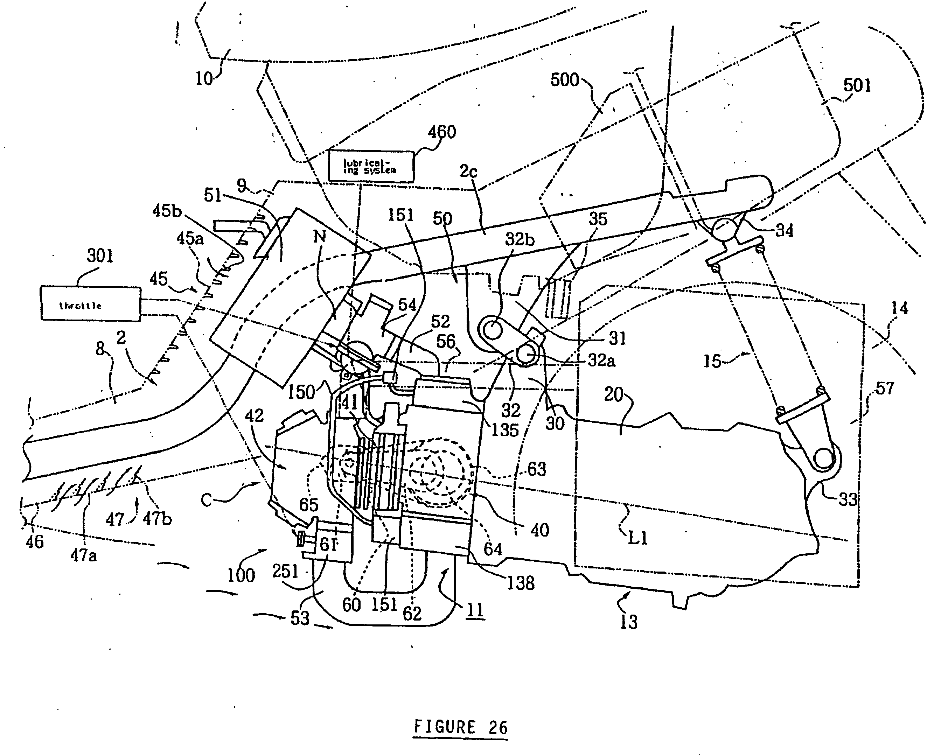

Now, still another embodiments are described of the unit-swinging engine unit incorporating a connecting rod type supercharged engine with reference to Fig. 26 through Fig. 37. In these embodiments, upstream of the pressurizing stage in the crank chamber 63 is likewise disposed the carburetor 54 constituting the fuel supply system N for supplying fuel while the intake control valve 251 is disposed downstream of the pressurizing stage in the crank chamber 63, and the intake control valve 251 and the carburetor 54 are adapted to be actuated in association with operation of the throttle 301, so that response of fuel supply can be improved, thus, like elements are designated like reference numerals, and detailed descriptions are omitted.

The crank chamber 63, pressurized intake air pipe 53, and carburetor 54, are disposed on a line along the cylinder axis L2 in plan view. However, the carburetor 54 is disposed upwardly of the engine 100, and fuel from the carburetor 54 is fed to the air drawn from the upper side of the crank chamber 54, to be supplied as a mixture to the crank chamber 64 before pressurization. The mixture is pressurized in the crank chamber 64, to be supplied to the combustion chamber 65 from the lower side of the crank chamber 64 through the pressurized intake air pipe 53 and intake control valve 251, and the intake control valve 251 is actuated in association with the carburetor 54 through operation of the throttle 301. This embodiment also has a lot of favorable features such as the first through the fourth advantages described in the first embodiment in addition to the construction defined in the appended claims.

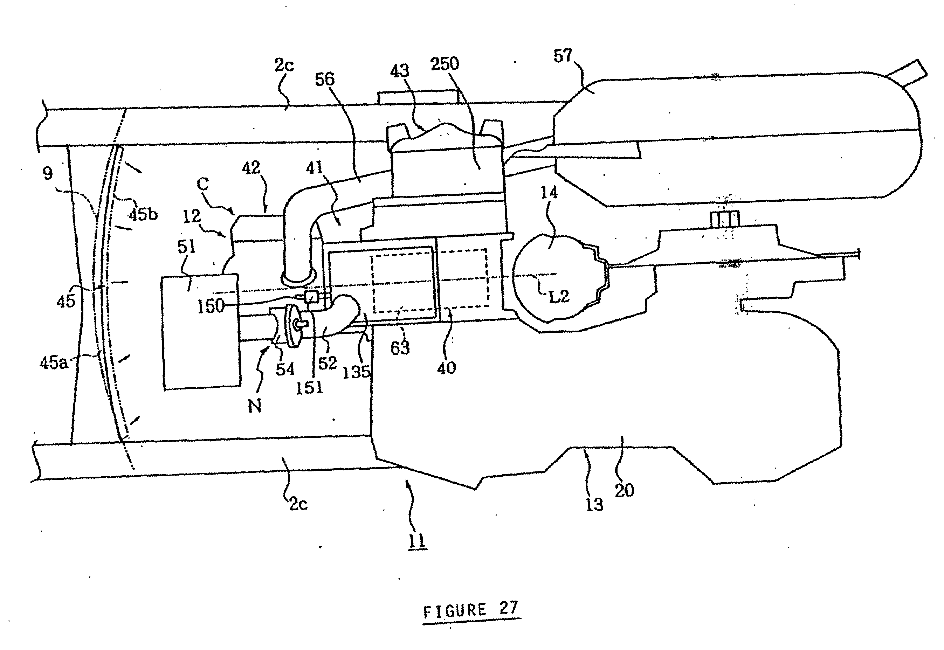

Fig. 26 and Fig. 27 show a tenth embodiment of the unit-swinging engine unit incorporating an air-cooled four-stroke supercharged engine, Fig. 26 is a side view of the unit-swinging engine unit, and Fig. 27 a plan view of the same. In the engine unit 11 of this embodiment, the pressurized intake air pipe 53 and pressurized control valve 251 are disposed downwardly of the engine 100 and connected to the lower side of the cylinder head 42 from the lower side of the crank case 40, so that the length of the pressurized intake air pipe 53 can be reduced to a minimum, which improves charging efficiency. Also, the pressurized intake air pipe 53 is exposed to a running wind, so that the pressurized air to be sent to the combustion chamber 65 is cooled down, which improves charging efficiency. A plurality of cooling fins on the pressurized intake air pipe 53 will provide further satisfactory results. The exhaust pipe 56 is connected to the upper side of the cylinder head 42, extends rearwardly at the right side of the engine unit 11, and connected at the rear end to the muffler 57, which is located sidewardly of the rear wheel 14 and exposed to a running wind, thereby cooling the exhaust gas. Downwardly of the seat 10 are disposed an oil tank 500 and a fuel tank 501.

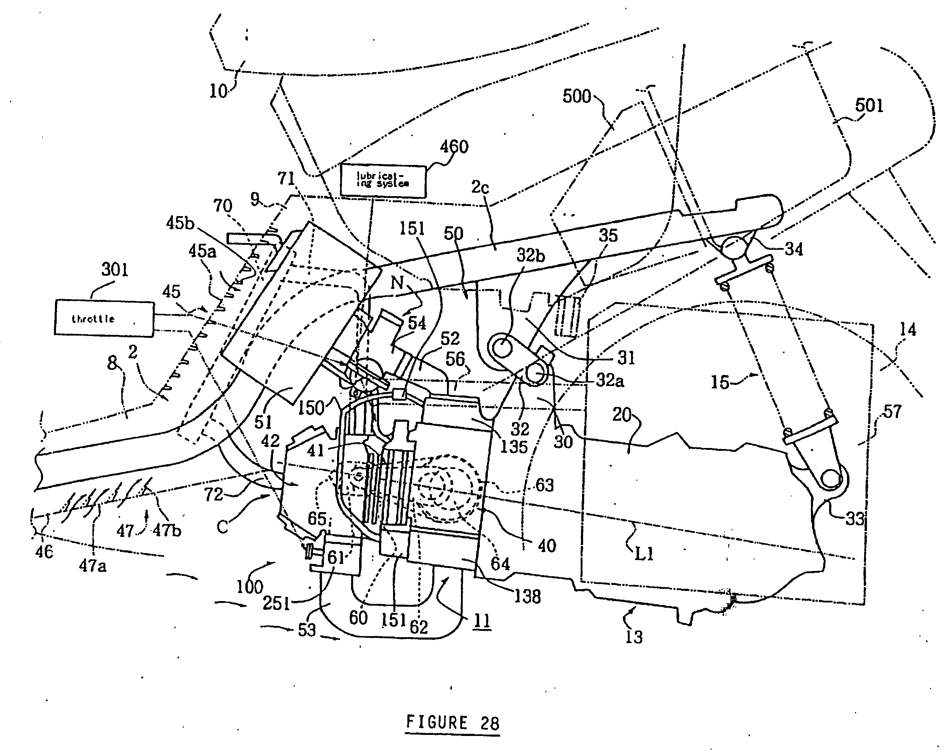

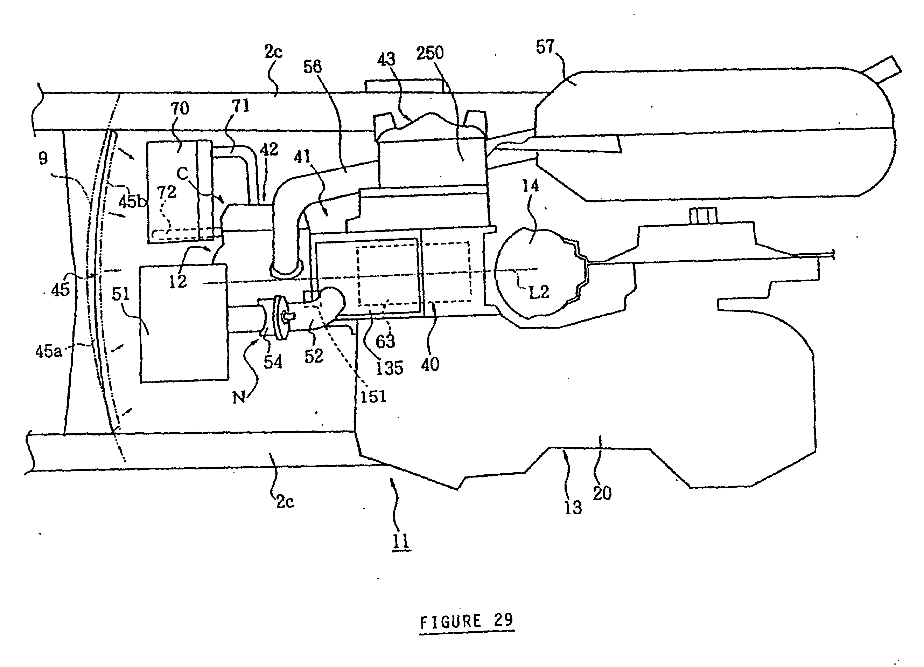

Fig. 28 and Fig. 29 show an eleventh embodiment of the unit-swinging engine unit incorporating a water-cooled four-stroke supercharged engine, Fig. 28 is a side view of the unit-swinging engine unit, and Fig. 29 a plan view of the same. The engine unit 11 of this embodiment has the same construction as the one of Fig. 26 and Fig. 27 except that the the radiator 70 is disposed at the right side of and parallel to the air cleaner 51 and upwardly of the engine 100, thus, like elements are designated like reference numerals, and detailed descriptions are omitted. In the embodiments of Fig. 7 and Fig. 8, Fig. 11 and Fig. 12, Fig. 13 and Fig. 14, Fig. 32 and Fig. 33, and Fig. 36 and Fig. 37 as well as in this embodiment, besides the cooling water cooling down the cylinder head after being cooled by the radiator, a water jacket may be provided on the pressurized intake air passage 138 or the pressurized intake air pipe 52, for circulating cooling water. This will ensure improved charging efficiency of the fresh air to the combustion chamber 65. The water jacket around the cylinder head, and that on the pressurized intake air pipe 52 are disposed either in parallel or in series.

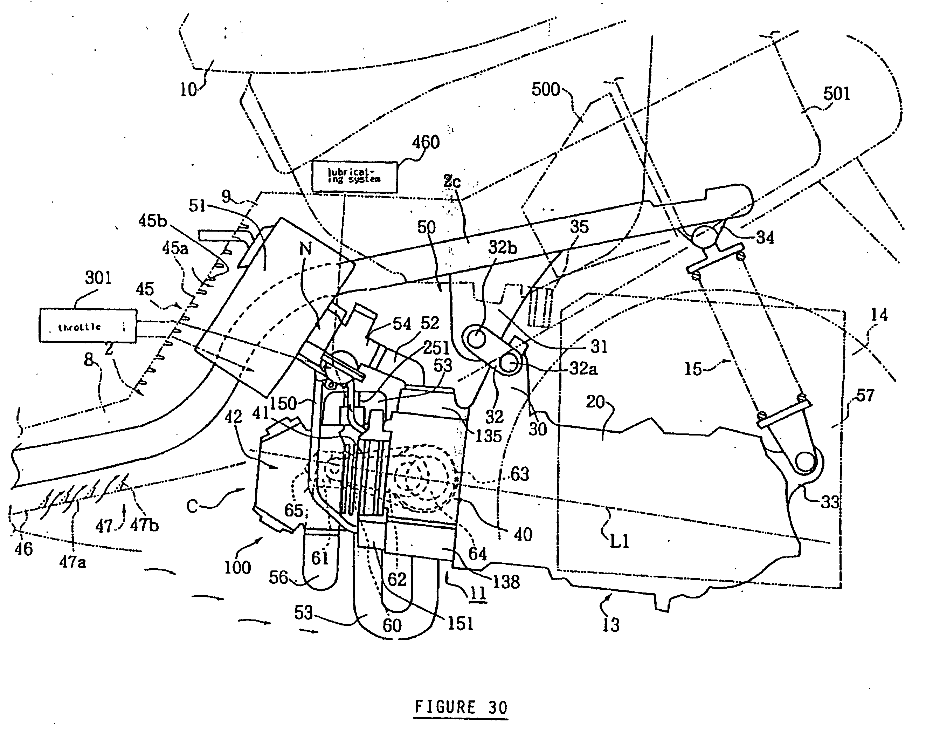

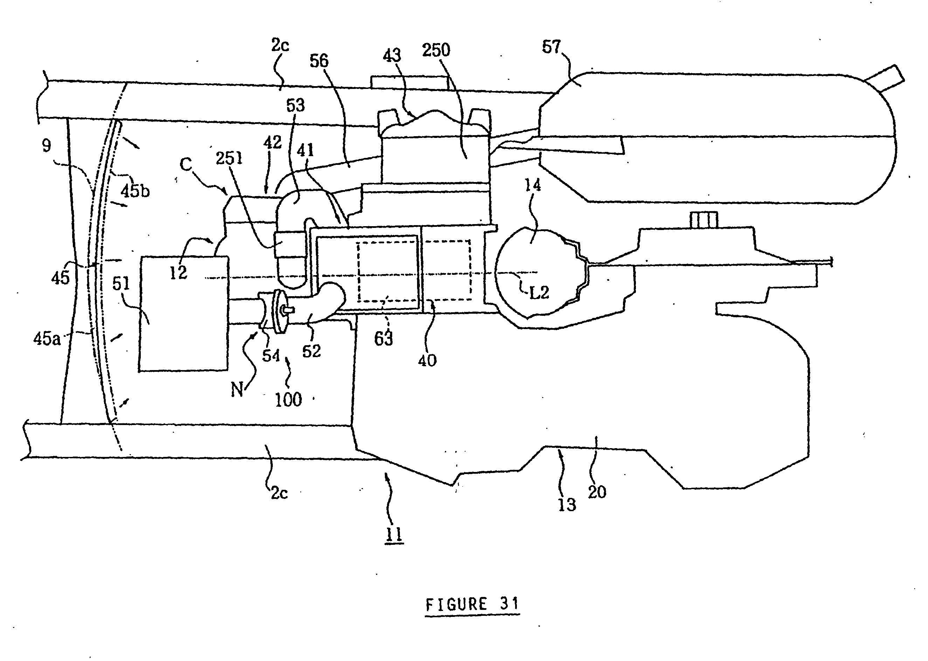

Fig. 30 and Fig. 31 show a twelfth embodiment of the unit-swinging engine unit incorporating an air-cooled four-stroke supercharged engine, Fig. 30 is a side view of the unit-swinging engine unit, and Fig. 31 a plan view of the same. In the engine unit 11 of this embodiment, the pressurized intake air pipe 53 passes the right side of the cylinder head upwardly from the lower side of the crank case 40, to be connected to the upper side of the same, so that the pressurized intake air pipe 53 is provided with a given cooling path, which is exposed to a running wind and cools down pressurized air to be sent to the combustion chamber 65. The exhaust pipe 56 is connected to the upper side of the cylinder head 42, extends rearwardly at the right side of the engine unit 11, and connected at the rear end to the muffler.

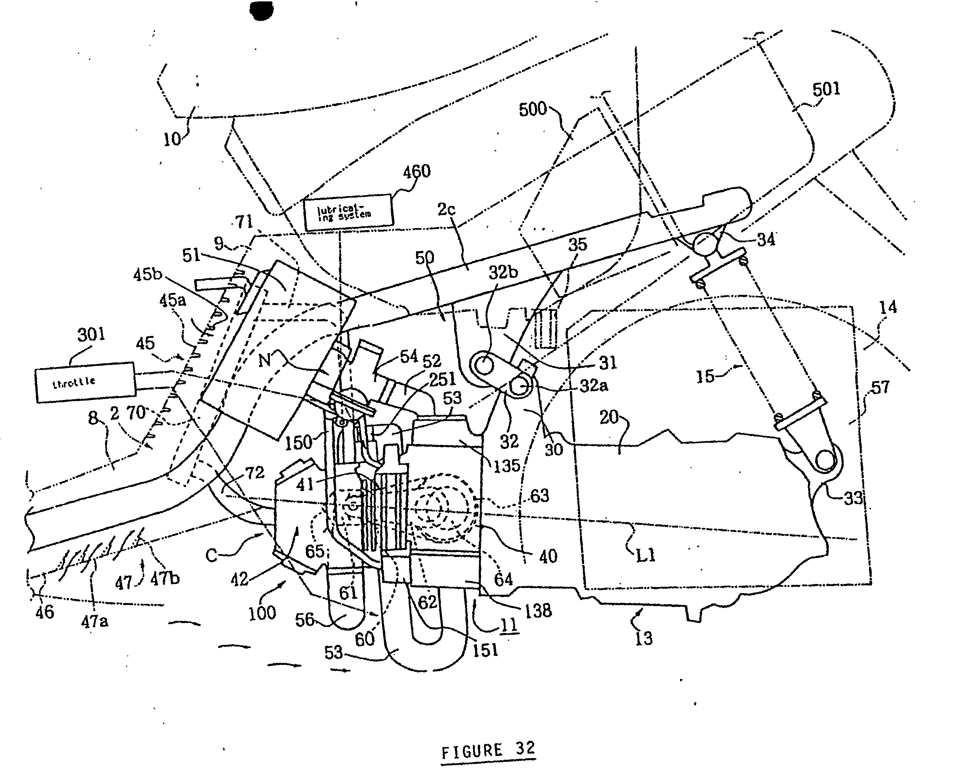

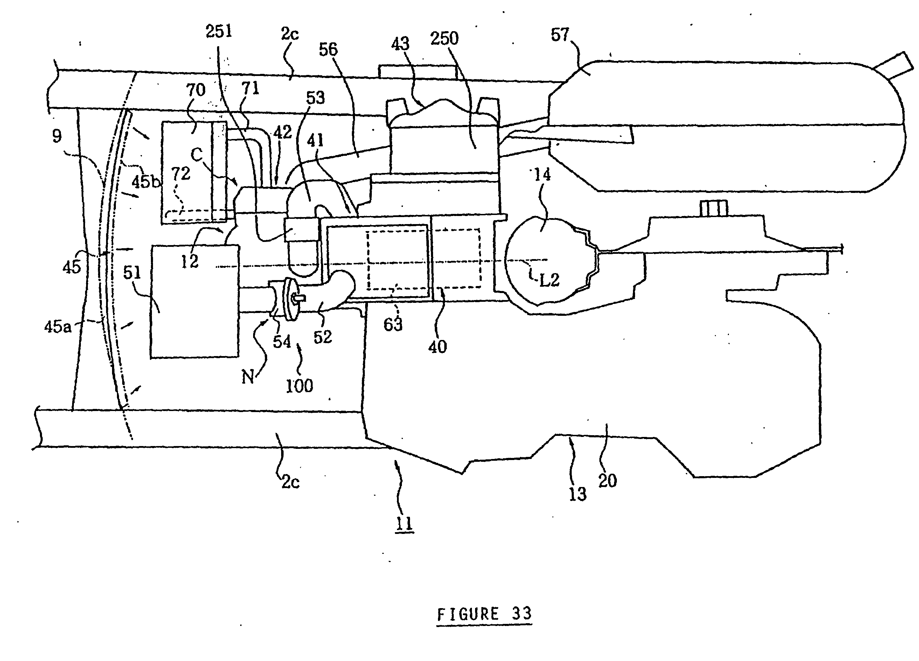

Fig. 32 and Fig. 33 show a thirteenth embodiment of the unit-swinging engine unit incorporating a water-cooled four-stroke supercharged engine, Fig. 32 is a side view of the unit-swinging engine unit, and Fig. 33 a plan view of the same. The engine unit 11 of this embodiment has the same construction as the one of Fig. 30 and Fig. 31 except that the the radiator 70 is disposed at the right side of and parallel to the air cleaner 51 and upwardly of the engine 100, thus, like elements are designated like reference numerals, and detailed descriptions are omitted.

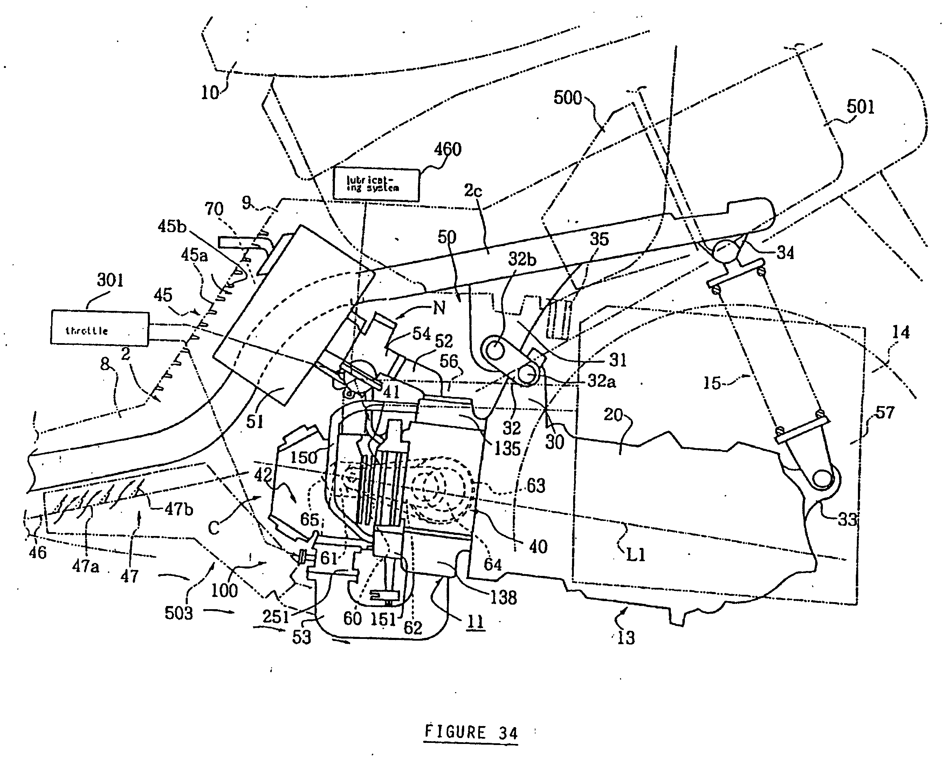

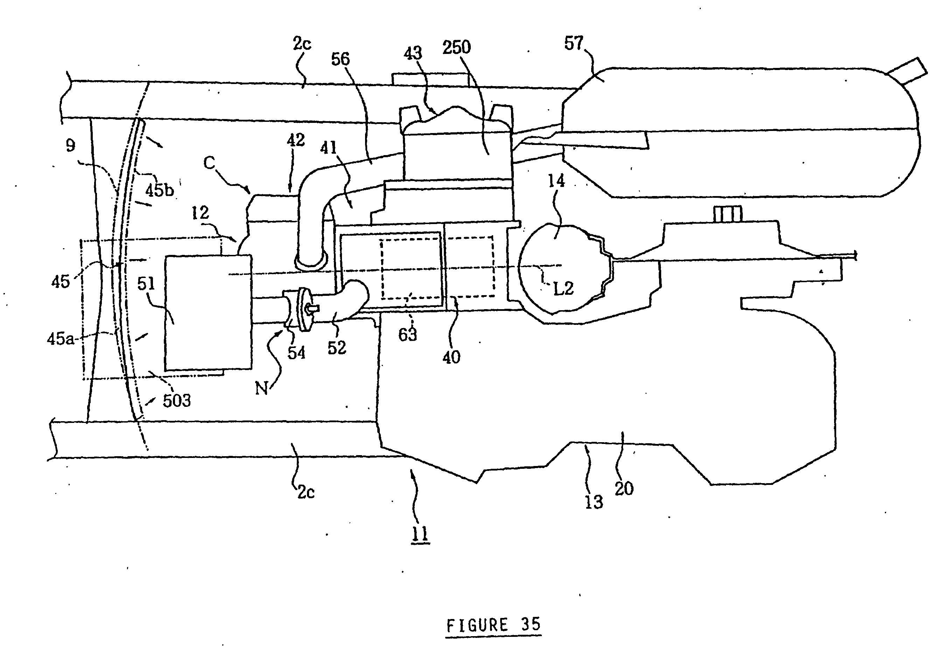

Fig. 34 and Fig. 35 show a fourteenth embodiment of the unit-swinging engine unit incorporating a water-cooled four-stroke supercharged engine, Fig. 34 is a side view of the unit-swinging engine unit, and Fig. 35 a plan view of the same. The engine unit 11 of this embodiment has the same construction as the one of Fig. 30 and Fig. 31, but to the pressurized intake air pipe 53 is connected a supercharge tank 503 for preventing pressure variation of the pressurized air to be supplied to the cylinder. The supercharge tank 503 is disposed forwardly of the engine 100, at the place where it is exposed to a running wind.

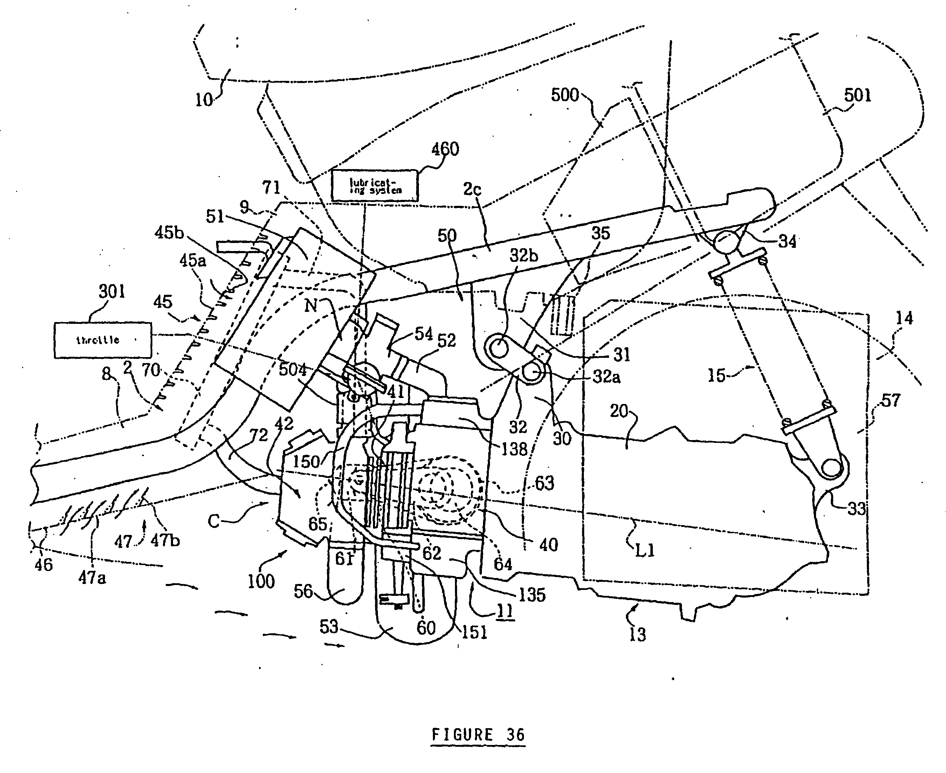

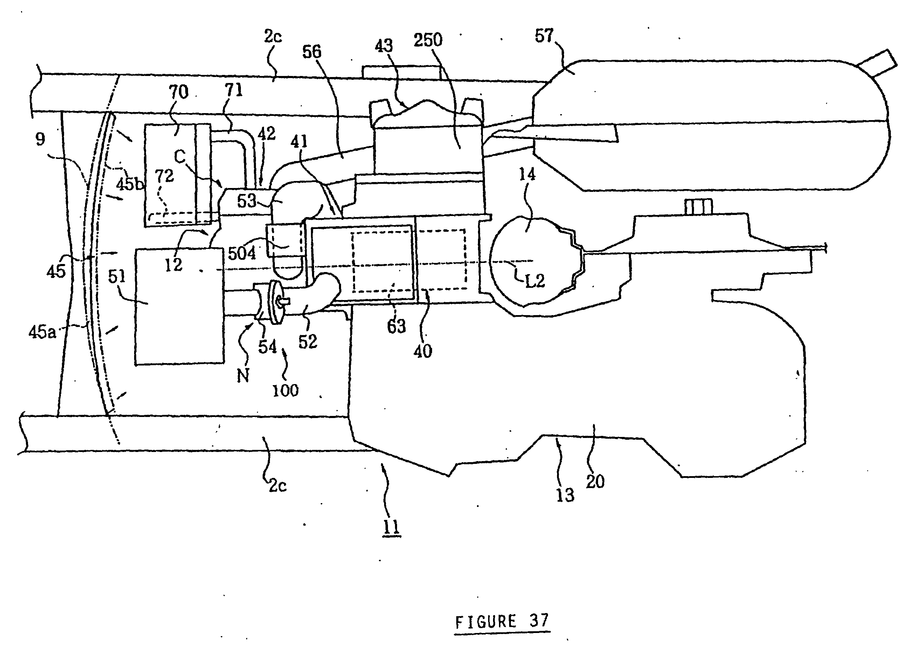

Fig. 36 and Fig. 37 show a fifteenth embodiment of the unit-swinging engine unit incorporating a water-cooled four-stroke supercharged engine, Fig. 36 is a side view of the unit-swinging engine unit, and Fig. 37 a plan view of the same. The engine unit 11 of this embodiment has the same construction as the one of Fig. 32 and Fig. 33, but on the pressurized intake air pipe 53 is provided an intercooler 504 for cooling air pressurized to a higher temperature. The intercooler 504 is disposed upwardly of the cylinder head 42 and in the vicinity of and rearwardly of a radiator 70.

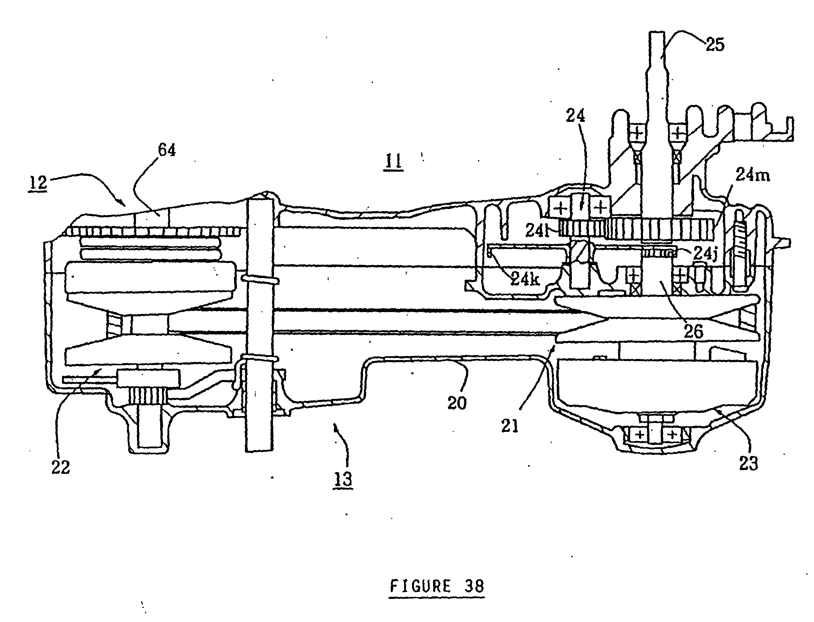

Now, the rear wheel drive system of the unit-swinging engine unit 11 of the embodiments in Fig. 22 through Fig. 37, will be described. In this embodiments, since the crank shaft 64 rotates clockwise, its direction of rotation is opposite to that of the rear wheel 14. Fig. 38 is a sectional view of the rear wheel drive system with the rear wheel rotatable in the opposite direction to the engine. In the rear wheel transmission 13 of the unit-swinging engine unit 11, a power transmission mechanism 21 enclosed in a transmission case 20 of the rear wheel transmission 13, is comprised of a V-belt auto-speed changer 22 connected to the crank shaft 64, a centrifugal clutch 23, an output shaft 26, and a gear train 24.

A gear train 24 is comprised of a first gear 24j, second gear 24k of an inner gear type, third gear 241, fourth gear 24m etc. The power is transmitted, while reducing its speed, from the first gear 24j mounted on the output shaft 26, through the second, third, and fourth gears 24k, 241, 24m, to a rear wheel shaft 25, but because of the second gear 24k being constituted by an inner gear, the rear wheel is adapted to rotate in the opposite direction to the engine, that is, it is driven for rotation through the power transmission mechanism 21 by the engine in the opposite direction to the wheel during advancing.

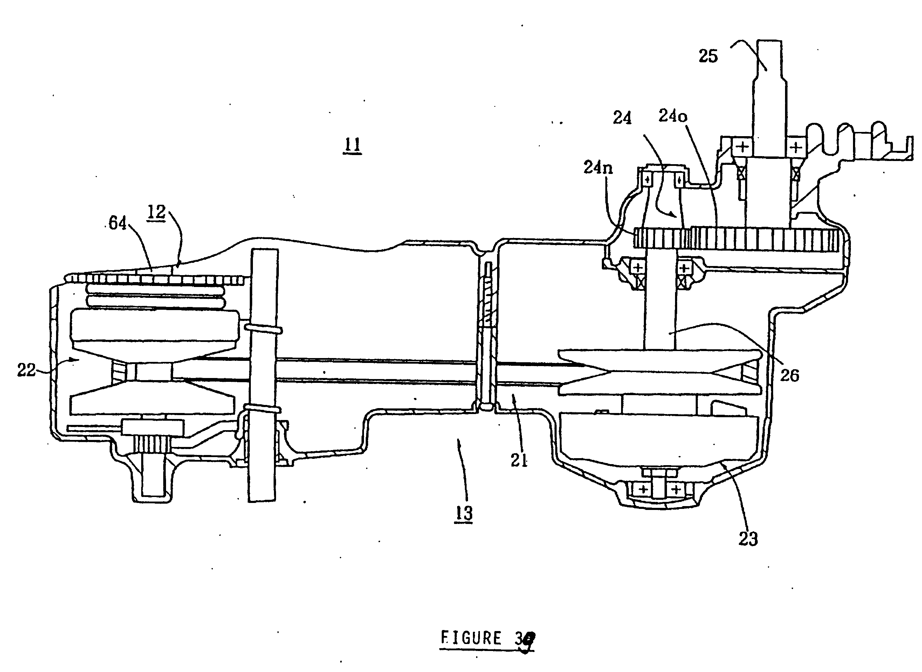

Fig. 39 is a sectional view of the rear wheel drive system with the rear wheel rotatable in the opposite direction to the engine. In the rear wheel transmission 13 of the unit-swinging engine unit 11, as with the preceding embodiment, a power transmission mechanism 21 enclosed in a transmission case 20 of the rear wheel transmission 13, is comprised of a V-belt auto-speed changer 22, a centrifugal clutch 23, an output shaft 26, and a gear train 24, though the constitution of the gear train 24 is different.

A gear train 24 is comprised of a first gear 24n, second gear 24o etc. The power is transmitted, while reducing its speed, from the first gear 24n mounted on the output shaft 26, through the second gear 24o, to a rear wheel shaft 25, and the rear wheel is adapted to rotate in the opposite direction to the engine.

A fuel injection device may be adopted as a fuel supply system in place of the carburetor. In this case, good response is achieved of fuel supply if the fuel injection device is disposed such that fuel is injected either directly to the combustion chamber or to the pressurized intake air passage. If the second throttle valve is disposed in the suction passage in associated relation with the first throttle valve disposed in the pressurized intake air passage, in that case, the above-mentioned effects is ensured. The same result is likewise obtained if a bypass pipe and a bypass valve are provided such that the bypass valve is opened/closed oppositely to and in association with the throttle valve. If the fuel injection device is disposed such that fuel is injected to the suction path, response of fuel supply is lowered, but injection pressure can be maintained at a small value.

The first and second throttle valves operate in association with throttle operation, so that the second throttle valve is also closed during deceleration, for example, thereby preventing highly pressurized fresh air from being held in a space between the first throttle valve and the crank chamber. If highly pressurized fresh air is held there, the pressurized fresh air will flow into the combustion chamber through the small opening of the first throttle valve, so that decelerating ability can not be secured. Further, if the highly pressurized fresh air is held there, the pressure in the supercharge system will also be increased, so that lubricating oil may flow backward when supplied into the supercharge system, for example, or sealing means in the supercharge system, for example, may be damaged. According to this invention, however, such an excessive pressure rise can not happen in the supercharge system. In addition, the second throttle valve is opened during acceleration, for example, so that pressurized fresh air is produced immediately in the crank chamber, thereby providing excellent accelerating ability.

According to another embodiment of the present invention, the first throttle valve and bypass passage sectional area varying valve are associated with each other such that while one valve operates toward valve closing, the other valve operates toward valve opening, and while one valve operates toward valve opening, the other valve operates toward valve closing , and
in addition to the function of claim 1, the first throttle valve and the bypass passage cross section varying valve operate in association with throttle operation, and pressurized fresh air will flow back to the suction side when engine load is low, so that pressure difference between the upstream and downstream sides of the supercharge system can be kept small, thereby providing smaller pumping loss in the supercharge system. Further, an excessive pressure rise is prevented in the pressurized intake air passage during? deceleration, so that decelerating ability can be secured.

Further, it is possible that a fuel supply system for supplying fuel to said combustion chamber is provided in the suction path, so that ressure required for fuel supply in the fuel supply system can be lowered.

Moreover, the second throttle valve may be incorporated in said fuel supply system.

Not only pressure required for fuel supply in the fuel supply system is lowered, but also fuel supply can be controlled in association with throttle operation.

Finally, it is possible that the first throttle valve and bypass passage sectional area varying valve are associated with each other such that while one valve operates toward valve closing, the other valve operates toward valve opening, and while one valve operates toward valve opening, the other valve operates toward valve closing, so that the first throttle valve and the bypass passage cross section varying valve operate in association with throttle operation, and pressurized fresh air will flow back to the suction side when engine load is low, and pressure difference between the upstream and downstream sides of the supercharge system can be kept small, thereby providing smaller pumping? loss in the supercharge system. Further, an excessive pressure rise is prevented in the pressurized intake air passage during deceleration, so that decelerating ability can be secured.

## Claims

1. A supercharged internal combustion engine (11,100) for a vehicle, comprising a cylinder block (41) with a crank case (40), a cylinder head (42) and a cylinder bore (60) slidingly receiving a reciprocatable piston (61) being connected to a crankshaft (64) by means of a connecting rod (62), a supercharge system (50), a suction pipe (52) for intake air, and a pressurized intake air pipe (53) for providing a combustion chamber (65) with pressurized air, having a first throttle valve (251) provided therein for varying the amount of pressurized intake air, and by a second throttle valve (301) provided within in the suction pipe (52) wherein said first and second throttle valves (251, 301) are associated to each other such that both throttle valves (251, 301) are simultaneously openable and closable, respectively,
**characterized in**
**that** there is provided a bypass pipe (150) connecting said pressurized intake air pipe (53) with said suction pipe (52), said bypass pipe (150) is provided with a bypass valve (151) for varying the sectional area of said bypass pipe (150) and that said first throttle valve (251) and said bypass valve (151) are associated with each other such that when one of valves (251 or 151) opens, the other of the valves (251 or 151) closes.

2. A supercharged internal combustion engine according to claim 1, **characterized by** a fuel supply system (N) provided in the suction pipe (52).

3. A supercharged internal combustion engine according to claim 2, **characterized in that** said second throttle valve (301) is provided within said fuel supply system (N) .

4. A supercharged internal combustion engine according to at least one of claims 1 to 3, **characterized in that** said internal combustion engine is a unit-swinging engine (11, 100).

5. A supercharged internal combustion engine according to at least one of claims 1 to 4, **characterized in that** said internal combustion engine is of the air cooled and/or water cooled type.

6. A supercharged internal combustion engine according to at least one of claims 1 to 5, **characterized in that** said pressurized intake air pipe (53) is provided with an intercooler (504).

7. A supercharged internal combustion engine according to at least one of claims 1 to 6, **characterized in that** the supercharge system is a connecting rod supercharge system (50) in which the connecting rod (62) is in sealing condition or in sliding contact with crank webs (124) and with the interior surface of a crank chamber (63) such that the crank chamber (63) is dividable in a suction chamber (A) and in a compression chamber (B) by said moving connecting rod (62).

8. A supercharged internal combustion engine according to at least one of claims 1 to 7, **characterized in that** said internal combustion engine is of the four-stroke cycle type or of the two-stroke cycle type.

9. A supercharged internal combustion engine according to at least one of claims 1 to 8, **characterized in that** said vehicle is a scooter type auto- or motorcycle (1).

## Patentansprüche

1. Aufgeladene Brennkraftmaschine (11,100) für ein Fahrzeug mit einem Zylinderblock (41) mit einem Kurbelgehäuse (40), einem Zylinderkopf (42) und einer Zylinderbohrung (60), die gleitend einen hin- und hergehbaren Kolben (61), der mit einer Kurbelwelle (64) mittels einer Pleuelstange (62) verbunden ist, aufnimmt, einem Aufladungssystem (50), einem Ansaugrohr (52) für Einlassluft, und einem Druckluft- Einlassrohr (53) zum Versehen einer Brennkammer (65) mit Druckluft, das ein erstes Drosselventil (251), darin vorgesehen zum Verändern der Menge der Druckluft, aufweist und mit einem zweiten Drosselventil (301), vorgesehen innerhalb des Ansaugrohres (52), wobei das erste und zweite Drosselventil (251, 301) miteinander derart verbunden sind, dass jeweils beide Drosselventile (251, 301) gleichzeitig geöffnet werden können und verschließbar sind,
**dadurch gekennzeichnet, dass** ein Bypassrohr (150) vorgesehen ist, das das Druckluft- Einlassrohr (53) mit dem Ansaugrohr (52) verbindet, wobei das Bypassrohr (150) mit einem Bypassventil (151) zum Verändern der Querschnittsfläche des Bypassrohres (150) versehen ist und dass das erste Drosselventil (251) und das Bypassventil (151) miteinander derart verbunden sind, dass dann, wenn eines der Ventile (251 oder 151) öffnet, das andere der Ventile(251 oder 151) schließt.

2. Aufgeladene Brennkraftmaschine nach Anspruch 1, **gekennzeichnet durch** ein Kraftstoffzuführungssystem (N), vorgesehen in dem Ansaugrohr (52).

3. Aufgeladene Brennkraftmaschine nach Anspruch 2, **dadurch gekennzeichnet, dass** das zweite Drosselventil (301) innerhalb des Kraftstoffzuführungssystems (N) vorgesehen ist.

4. Aufgeladene Brennkraftmaschine nach zumindest einem der Ansprüche 1 bis 3,
**dadurch gekennzeichnet, dass** die Brennkraftmaschine ein als Einheit schwingender Motor (11, 100) ist.

5. Aufgeladene Brennkraftmaschine nach zumindest einem der Ansprüche 1 bis 4,
**dadurch gekennzeichnet, dass** die Brennkraftmaschine von der luftgekühlten und / oder der wassergekühlten Art ist.

6. Aufgeladene Brennkraftmaschine nach zumindest einem der Ansprüche 1 bis 5,
**dadurch gekennzeichnet, dass** das Druckluft- Einlassrohr (53) mit einem Zwischenkühler (504) versehen ist.

7. Aufgeladene Brennkraftmaschine nach zumindest einem der Ansprüche 1 bis 6,
**dadurch gekennzeichnet, dass** das Aufladungssystem ein Pleuelstangen- Aufladungssystem (50) ist, in dem die Pleuelstange (62) in abgedichteten Zustand oder in Gleitkontakt mit Kurbelscheiben (124) und mit der Innenoberfläche einer Kurbelkammer (63) derart ist, dass die Kurbelkammer (63) in eine Ansaugkammer (a) und in eine Druckkammer (B) durch die sich bewegende Pleuelstange (62) unterteilbar ist.

8. Aufgeladene Brennkraftmaschine nach zumindest einem der Ansprüche 1 bis 7,
**dadurch gekennzeichnet, dass** die Brennkraftmaschine vom Viertakt- Typ oder der Zweitakt- Typ ist.

9. Aufgeladene Brennkraftmaschine nach zumindest einem der Ansprüche 1 bis 8,
**dadurch gekennzeichnet, dass** das Fahrzeug ein Motorrad (1) vom Rollertyp ist.

## Revendications

1. Moteur à combustion interne suralimenté (11, 100) destiné à un véhicule, comprenant un bloc-cylindres (41) comportant un carter moteur (40), une culasse (42) et un alésage de cylindre (60) recevant en coulissement un piston à mouvement alternatif (61) qui est connecté à un vilebrequin (64) au moyen d'une bielle (62), un système de suralimentation (50), un conduit d'aspiration (52) d'air à l'admission, et un conduit d'admission d'air sous pression (53) destiné à fournir de l'air sous pression à une chambre de combustion (65), comportant un premier papillon des gaz (251) aménagé dans celui-ci, afin de modifier la quantité d'air sous pression à l'admission, et un second papillon des gaz (301) aménagé à l'intérieur du conduit d'aspiration (52) dans lequel lesdits premier et second papillons des gaz (251, 301) sont associés l'un à l'autre de sorte que les deux papillons des gaz (251, 301) peuvent respectivement s'ouvrir et se fermer simultanément,
**caractérisé en ce qu'**il est fourni un conduit de dérivation (150) connectant ledit conduit d'admission d'air sous pression (53) et ledit conduit d'aspiration (52), ledit conduit de dérivation (150) comporte un clapet de dérivation (151) destiné à modifier la surface de la section dudit conduit de dérivation (150) et **en ce que** ledit premier papillon des gaz (251) et ledit clapet de dérivation (151) sont associés l'un à l'autre de sorte que, lorsque l'un des clapets (251 ou 151) s'ouvre, l'autre des clapets (251 ou 151) se ferme.

2. Moteur à combustion interne suralimenté selon la revendication 1, **caractérisé par** un système d'alimentation en carburant (N) aménagé dans le conduit d'aspiration (52).

3. Moteur à combustion interne suralimenté selon la revendication 2, **caractérisé en ce que** ledit second papillon des gaz (301) est aménagé à l'intérieur dudit système d'alimentation en carburant (N).

4. Moteur à combustion interne suralimenté selon au moins l'une des revendications 1 à 3, **caractérisé en ce que** ledit moteur à combustion interne est un moteur à ensemble oscillant (11, 100).

5. Moteur à combustion interne suralimenté selon au moins l'une des revendications 1 à 4, **caractérisé en ce que** ledit moteur à combustion interne est du type à refroidissement par air et / ou à refroidissement par eau.

6. Moteur à combustion interne suralimenté selon au moins l'une des revendications 1 à 5, **caractérisé en ce que** ledit conduit d'admission d'air sous pression (53) comporte un refroidisseur intermédiaire (504).

7. Moteur à combustion interne suralimenté selon au moins l'une des revendications 1 à 6, **caractérisé en ce que** le système de suralimentation est un système de suralimentation à bielle (50) dans lequel la bielle (62) est en condition d'étanchéité ou en contact coulissant avec des masses d'équilibrage (124) et avec la surface interne d'une chambre d'embiellage (63) de sorte que la chambre d'embiellage (63) peut être divisée en une chambre d'aspiration (A) et une chambre de compression (B) par le déplacement de ladite bielle (62).

8. Moteur à combustion interne suralimenté selon au moins l'une des revendications 1 à 7, **caractérisé en ce que** ledit moteur à combustion interne est du type à quatre temps ou du type à deux temps.

9. Moteur à combustion interne suralimenté selon au moins l'une des revendications 1 à 8, **caractérisé en ce que** ledit véhicule (1) est un véhicule de type scooter ou de type motocycle.
